# EUROPEAN PATENT SPECIFICATION

(11) **EP 4 447 415 B1**
(45) Date of publication and mention of the grant of the patent: **22.04.2026**
(21) Application number: 23746256.9
(22) Date of filing: 19.01.2023
(51) Int. Cl.: H04L 67/1095, G06F 16/176, G06F 16/178

(54) **CONTENT MANAGEMENT METHOD, AND ELECTRONIC DEVICE AND SYSTEM**
INHALTSVERWALTUNGSVERFAHREN SOWIE ELEKTRONISCHE VORRICHTUNG UND SYSTEM
PROCÉDÉ DE GESTION DE CONTENUS, DISPOSITIF ÉLECTRONIQUE ET SYSTÈME

(30) Priority: 27.01.2022 CN 202210100318; 15.04.2022 CN 202210400216
(43) Date of publication of application: 16.10.2024
(73) Proprietor: Huawei Technologies Co., Ltd., Shenzhen, Guangdong 518129 (CN)
(72) Inventor: XIA, Qizhong, Shenzhen, Guangdong 518129 (CN)
(74) Representative: Pfenning, Meinig & Partner mbB
(86) International application number: PCT/CN2023/073165
(87) International publication number: WO 2023/143377

(56) References cited:
- WO-A1-2013/059902
- WO-A1-2021/190352
- CN-A- 101 247 483
- CN-A- 103 024 589
- CN-A- 103 733 197
- US-A1- 2011 313 972
- US-A1- 2018 234 716
- US-A1- 2023 122 838

## Description

### CROSS-REFERENCE TO RELATED APPLICATIONS

### TECHNICAL FIELD

This application relates to the field of computers, and in particular, to a content management method, an electronic device, a computer-readable storage medium and a computer program product.

### BACKGROUND

Currently, an electronic device can store or back up data content of the electronic device in another external storage device, to meet a requirement for securely and reliably storing a large amount of data content, and to save storage space of the electronic device. The external storage device may be, for example, a cloud server or a home data center (home data center, HDC) device. For content locally stored in the electronic device, various applications in the electronic device may directly perform processing such as access. However, for content stored in the external storage device by the electronic device, the electronic device needs to use a specific application that matches the external storage device to perform processing such as access. If another application needs to access content in the external storage device, the specific application that matches the external storage device needs to download the content to the electronic device, and then the another application accesses the content that is downloaded locally.

Therefore, the current electronic device needs to separately access content in the external storage device and local content of the electronic device in different manners. An access process is cumbersome and complicated, and access efficiency is low.
WO2021190352A1 discloses a data sharing method comprising: an electronic device establishing a network connection with the other electronic device, wherein the network connection is used for data transmission; when an operation of a user searching for a target file is detected, the electronic device requesting, from the other electronic device, a shared file associated with the target file; the electronic device receiving the shared file sent by the other electronic device; and the electronic device displaying a first interface, wherein the first interface comprises an identifier of a shared file of the electronic device and an identifier of the shared file of the other electronic device.
US2011313972A1 discloses a method of manipulating media. In one aspect, synchronization of media files involves identifying a change to an attribute associated with a media file associated with a first media file library located on the host system; accessing a client device list including device IDs for devices associated with the first media file library; identifying a first client device indicated by the device list; accessing a first synchronization order file stored on a server system; modifying the first synchronization order file to indicate the change to the attribute associated with the media file; and providing the modified first synchronization order file to the server system to enable the first client device to apply the indicated change to the attribute associated with the media file within a second media file library located on the first client device.

### SUMMARY

This application provides a content management method, to improve efficiency of accessing stored multi-terminal media content by an electronic device.

The invention is defined in the appended set of claims. According to a first aspect, an embodiment of this application provides a content management method, applied to a first electronic device. The first electronic device includes a first service and a first application. The method includes: The first service obtains first information and second information, and stores the first information and the second information, where the first information identifies first media content stored in the first electronic device, and the second information identifies second media content stored in a second electronic device. The first application obtains the first information and/or the second information from the first service. The first application displays the first information and/or the second information.

In this method, the first electronic device may obtain, by using a same service (namely, the first service), identification information of the media content locally stored in the first electronic device, and may also obtain identification information of the media content stored in the second electronic device. Based on the identification information of the media content, the first service may access and manage the media content stored in the first electronic device and another electronic device together. Based on this, an application installed in the first electronic device may directly obtain, from the first service, metadata of the media content stored in the first electronic device and the another electronic device, and access, based on the obtained metadata, the media content stored in the first electronic device and the another device, thereby conveniently and quickly accessing the stored multi-terminal media content. Therefore, this solution can improve efficiency of accessing the stored multi-terminal media content by the application in the electronic device.

In a possible design, the first electronic device further includes a second application. After the first service obtains the first information and the second information, and stores the first information and the second information, the method further includes: The second application obtains the first information and/or the second information from the first service. The second application displays the first information and/or the second information.

In this method, different applications installed in the first electronic device may all access, by using the first service, the media content stored in the first electronic device and the another device, thereby conveniently and quickly accessing the stored multi-terminal media content. Therefore, this solution can improve efficiency of accessing the stored multi-terminal media content by the application in the electronic device.

In a possible design, that the first application obtains the first information and/or the second information from the first service includes: The first application obtains the first information and/or the second information from the first service by using a first interface provided by the first service.

In this method, the first service may provide an access interface for the application in the first electronic device, to implement a connection between the first service and the application in the first electronic device. In this way, the application in the first electronic device accesses, by using the interface, the content stored in the first service.

In a possible design, first metadata corresponding to the first media content includes the first information, and second metadata corresponding to the second media content includes the second information. That the first service obtains first information and second information, and stores the first information and the second information includes: The first service obtains and stores the first metadata, and the first service obtains and stores the second metadata.

In this method, the metadata may indicate the media content. The first service may ensure storage of detailed information related to the media content by obtaining and storing the metadata, to facilitate subsequent processing such as access to the media content. In addition, the identification information of the media content, namely, the first information and the second information, may be determined based on the metadata. Therefore, the identification information of the media content is presented to a user in the application, which is more convenient for the user to view.

In a possible design, that the first service obtains and stores the second metadata includes: The first service performs a downlink synchronization process. The downlink synchronization process includes: The first service indicates the second electronic device to send downlink synchronization information to the first service. The first service receives the downlink synchronization information sent by the second electronic device, where the downlink synchronization information includes the second metadata and first indication information, and the first indication information indicates that the second metadata is metadata corresponding to created media content in the second electronic device. The first service determines, based on the first indication information, to store the second metadata. The first service stores the second metadata.

In this method, the second media content is the content stored in the second electronic device. By performing a downlink synchronization process, the first service in the first electronic device may obtain metadata of the second media content from the second electronic device and store the metadata. Storage space required by the metadata is far less than space required by the media content. Therefore, storage space on a first electronic device side can be saved, and it is ensured that the first electronic device side can determine information about the second media content stored in the second electronic device, so that an application can perform query and access, and the like. Based on the downlink synchronization process, the first service may determine information about the newly created media content in the second electronic device, and perform a corresponding update, to implement effect that metadata on the first electronic device side synchronously changes with media content on a second electronic device side, thereby ensuring that the metadata on the first electronic device side can accurately indicate the media content stored on the second electronic device side.

In a possible design, before the first service obtains and stores the second metadata, the method further includes: The first service obtains and stores third metadata, where the third metadata is metadata corresponding to third media content stored in the second electronic device. That the first service obtains and stores the second metadata includes: The first service performs a downlink synchronization process. The downlink synchronization process includes: The first service indicates the second electronic device to send downlink synchronization information to the first service. The first service receives the downlink synchronization information from the second electronic device, where the downlink synchronization information includes the second metadata and second indication information, the second indication information indicates that the second metadata is metadata obtained after the third metadata is modified, and the second media content is the third media content or modified third media content. The first service determines, based on the second indication information, to update the stored third metadata by using the second metadata. The first service updates the third metadata to the second metadata.

In this method, when the media content and the metadata are modified in the second electronic device, the first electronic device performs the downlink synchronization process by using the first service, and may perform a corresponding update, thereby implementing effect that the metadata on the first electronic device side synchronously changes with the media content on the second electronic device side. In this way, the metadata stored in the first electronic device corresponds to the media content stored in the second electronic device, thereby ensuring that the metadata on the first electronic device side can accurately indicate the media content stored on the second electronic device side.

In a possible design, after the first service obtains and stores the second metadata, the method further includes: The first service performs a downlink synchronization process. The downlink synchronization process includes: The first service indicates the second electronic device to send downlink synchronization information to the first service. The first service receives the downlink synchronization information from the second electronic device, where the downlink synchronization information includes third indication information, and the third indication information indicates that the second metadata is metadata corresponding to deleted media content in the second electronic device. The first service determines, based on the third indication information, to delete the second metadata. The first service deletes the stored second metadata.

In this method, when the media content in the second electronic device is deleted, the first service in the first electronic device may obtain, by performing downlink synchronization, information about the deleted media content in the second electronic device, and delete corresponding metadata in the first electronic device, to implement effect that the metadata on the first electronic device side synchronously changes with the media content on the second electronic device side, thereby ensuring that the metadata on the first electronic device side can accurately indicate the media content stored on the second electronic device side.

In a possible design, that the first service performs a downlink synchronization process includes: The first service performs the downlink synchronization process when determining that a start time of a first period arrives; or the first service performs the downlink synchronization process when determining that fourth media content is stored in the first electronic device; or the first service performs the downlink synchronization process when determining that fifth media content stored in the first electronic device is modified; or the first service performs the downlink synchronization process when determining that sixth media content stored in the first electronic device is deleted.

In this method, the first service may perform downlink synchronization when the content stored in the first electronic device changes, and may synchronize a change of the media content in the second electronic device to the first electronic device in a timely manner, thereby improving consistency between media content reflected by the metadata in the first electronic device and the media content actually stored in the second electronic device.

In a possible design, after the first application displays the first information and the second information, or after the first application displays the second information, the method further includes: The first application sends fourth indication information to the first service when determining to delete the second metadata, where the fourth indication information indicates to delete the second metadata. The first service deletes the second metadata in response to the received fourth indication information.

In this method, after displaying the identification information of the media content in the second electronic device, the application in the first electronic device can further perform a delete operation on metadata that corresponds to the media content of the second electronic device and that is stored by the first service. Therefore, this method can support the application in accessing and managing metadata of remote media content stored in the first electronic device, without using another application. Therefore, it is more convenient for the application to access and manage this part of metadata based on an instruction of the user, thereby improving user experience.

In a possible design, after the first application obtains the first information and the second information from the first service, or after the first application obtains the second information from the first service, the method further includes: The first application indicates the first service to obtain the second media content identified by the second information. The first service obtains the second media content from the second electronic device, and stores the second media content.

In this method, the first application may indicate the first service to obtain the media content stored in the second electronic device, and store the obtained media content. In this case, the first application may control downloading and storage of the remote media content as required, without using another application.

In a possible design, after the first service obtains the second media content from the second electronic device, and stores the second media content, the method further includes: The first application obtains the second media content from the first service. The first application modifies the second media content to seventh media content, and indicates the first service to update the second media content to the seventh media content and update the second metadata to fourth metadata, where the fourth metadata is metadata corresponding to the seventh content. The first service updates the second media content to the seventh media content, and updates the second metadata to the fourth metadata.

In this method, the application in the first electronic device may obtain, by using the first service, the media content stored in the second electronic device, and may modify the media content. Therefore, this method can support the application in accessing and managing metadata of remote media content stored in the first electronic device, without using another application. Therefore, it is more convenient for the application to access and manage this part of metadata based on an instruction of the user, thereby improving user experience.

In a possible design, after the first service updates the second media content to the seventh media content, and updates the second metadata to the fourth metadata, the method further includes: The first service performs an uplink synchronization process. The uplink synchronization process includes: The first service sends the seventh media content, the fourth metadata, and fifth indication information to the second electronic device, where the fifth indication information indicates to update the stored second media content to the seventh media content, and update the stored second metadata to the fourth metadata.

In this method, after the first application modifies the second media content, the first service performs the uplink synchronization process, so that the second electronic device can correspondingly modify the second media content, thereby implementing effect that the application on the first electronic device side manages the media content on the second electronic device side. However, the application may be controlled by the user. Therefore, the first service and the first application can support the user in controlling, on the first electronic device side, modification of the media content in the second electronic device, and the function does not need to be implemented by using a specific application. Therefore, this method has high universality and practicability, and can improve user experience.

In a possible design, after the first service obtains the second media content from the second electronic device, and stores the second media content, the method further includes: The first application sends sixth indication information to the first service when determining to delete the second media content and the second metadata, where the sixth indication information indicates to delete the second media content and the second metadata. The first service deletes the stored second media content and the stored second metadata in response to the received sixth indication information.

In this method, the application in the first electronic device can perform deletion management on the media content from the second electronic device by using the first service, and there is no need to depend on a specific application that matches the second electronic device. Therefore, the method can be applied to more application scenarios, and it is easier to meet a user requirement, thereby improving user experience.

In a possible design, the method further includes: The first service performs an uplink synchronization process. The uplink synchronization process includes: The first service sends seventh indication information to the second electronic device, where the seventh indication information indicates to delete the stored second media content and the stored second metadata.

In this method, after the second media content is deleted, the first service performs the uplink synchronization process, so that the second electronic device can perform a same operation, thereby implementing effect that the application on the first electronic device side manages the media content on the second electronic device side. However, the application may be controlled by the user. Therefore, the first service and the first application can support the user in controlling, on the first electronic device side, deletion of the media content in the second electronic device, and the function does not need to be implemented by using a specific application. Therefore, this method has high universality and practicability, and can improve user experience.

In a possible design, that the first service performs an uplink synchronization process includes: The first service performs the uplink synchronization process when determining that a start time of a second period arrives; or the first service performs the uplink synchronization process when determining that the second media content stored in the first electronic device is modified; or the first service performs the uplink synchronization process when determining that the second metadata stored in the first electronic device is deleted.

In this method, the first service may perform uplink synchronization when the content stored in the first electronic device changes, and may synchronize a change of the media content in the first electronic device to the second electronic device in a timely manner, thereby improving consistency between media content reflected by the metadata in the first electronic device and the media content actually stored in the second electronic device.

In a possible design, the first electronic device is in a state in which a first user account is logged in. Before the first service performs the uplink synchronization process, the method further includes: The first service sends a synchronization lock obtaining request to the second electronic device, where the synchronization lock obtaining request is used to request to obtain a synchronization lock, the synchronization lock indicates to allow the first electronic device to perform the uplink synchronization process, and prohibit a target electronic device from performing the uplink synchronization process, and the target electronic device is an electronic device that logs in to the first user account other than the first electronic device. The first service receives synchronization lock indication information from the second electronic device, where the synchronization lock indication information indicates the synchronization lock. After the first service performs the uplink synchronization process, the method further includes: The first service sends a synchronization lock canceling request to the second electronic device, where the synchronization lock canceling request is used to request to cancel the synchronization lock.

In this method, the first service applies to the second electronic device for a synchronization lock, so that it can be ensured that only the first electronic device performs the uplink synchronization process with the second electronic device at a same time. Therefore, when the first electronic device performs the uplink synchronization process, impact of modification of the media content in the second electronic device by another electronic device on the uplink synchronization of the first electronic device can be avoided, to ensure that the first electronic device smoothly performs the uplink synchronization.

In a possible design, after the first application obtains the first information and the second information from the first service, or after the first application obtains the second information from the first service, the method further includes: The first application determines to obtain the second media content. The first application sends a content obtaining request to the first service, where the content obtaining request is used to request to obtain the second media content. The first application receives the second media content from the first service. The first application displays the second media content.

In this method, when a media content source file needs to be used, the application may indicate the first service to obtain the media content source file, and obtain a media source file from the first service, to implement instant access of the application to remote media content.

In a possible design, after the first application sends the content obtaining request to the first service, and before the first application receives the second media content from the first service, the method further includes: The first service requests, in response to the received content obtaining request, to obtain the second media content from the second electronic device. The first service receives the second media content from the second electronic device, and sends the second media content to the first application.

In this method, the first electronic device stores metadata of the media content in the second electronic device instead of the media content source file. Therefore, when the application requests to obtain the media content source file, the first service may download the media content source file from the second electronic device as required, and provide the media content source file to the application, thereby implementing instant access of the application to remote media content in a temporary obtaining manner.

In a possible design, that the first application determines to obtain the second media content includes: In response to an operation for selecting the second information, the first application determines to obtain the second media content.

Based on this method, the user can choose whether to obtain the media content, and the application determines, based on an indication of the user, whether to obtain target content.

In a possible design, after the first application obtains the first information and the second information from the first service, the method further includes: The first application obtains third information from the first service, where the third information identifies eighth media content stored in the second electronic device. The first application displays the first information, the second information and the third information, where the second information is sorted adjacent to the third information. In response to an operation for selecting the second information, the first application indicates the first service to obtain the second media content and the eighth media content.

In this method, the second information may be information that is selected by the user to obtain corresponding media content, and the third information is adjacent to the second information. Therefore, when browsing the second media content corresponding to the second information, the user may also choose to browse the eighth media content corresponding to the third information. In this case, the application may determine to obtain the eighth media content when determining to obtain the second media content. When the user chooses to browse the eighth media content, the application may directly display the pre-obtained eighth media content. Therefore, in this method, the application can determine, based on a pre-determining manner, whether to obtain the media content stored in the second electronic device.

In a possible design, after the first application displays the first information and the second information, the method further includes: In response to a received first operation, the first application displays the second information, and skips displaying the first information, where the first operation indicates to view only information about media content stored in the second electronic device.

In this method, the first application may perform fusion display on identification information of local content of the first electronic device and the identification information of the media content in the second electronic device, to implement effect of presenting multi-terminal media content in a fusion manner. On this basis, the first application may further separately display the media content on the second electronic device side, to implement effect of separately presenting media content in a single terminal. In conclusion, the first application may flexibly switch a presentation manner of the identification information of the multi-terminal media content according to a user requirement, which has high practicability and can improve user experience.

In a possible design, the first media content and the second media content are images or videos, and the first information and the second information are thumbnails.

In a possible design, the first service is located at an application framework layer in an operating system of the first electronic device.

In this method, the first service is located at the application framework layer of the operating system, and may directly manage the media content locally stored in the first electronic device, or may interact with the second electronic device to manage the media content stored in the second electronic device, or may interact with the application installed in the first electronic device. Therefore, based on the first service, fusion management of the multi-terminal media content can be implemented, and fusion access of various applications to the multi-terminal media content can be implemented, thereby improving efficiency of accessing the media content.

In a possible design, the second electronic device is a home storage device.

In this method, the second electronic device is a home storage device. In this case, the first electronic device may provide, based on the first service, fusion access to media content in the first electronic device and the home storage device, thereby improving efficiency of accessing the media content on the first electronic device side and a home storage device side by the application.

In a possible design, that the first application displays the first information and the second information includes: The first application displays the first information and the second information in a first interface.

In this method, the first application may display the identification information of the media content in the first electronic device and the second electronic device in a same interface. Therefore, effect of presenting the metadata of the multi-terminal media content in a fusion manner can be implemented, so that the user can browse the media content stored in multi-terminal devices at a same time, and user experience is improved.

In a possible design, the first interface includes a first window, and the first window includes the first information and the second information. Alternatively, the first interface includes a second window and a third window, the second window includes the first information, and the third window includes the second information.

In this method, the first application may display the identification information of the multi-terminal media content in a same window. This facilitates the user to browse the multi-terminal media content in a fusion manner. The first application may also separately display the identification information of media content in different terminals in different windows. In this manner, it is convenient for the user to browse the multi-terminal media content by category and determine a media data source.

In a possible design, the first information and the second information are located in different areas in the first window. Alternatively, in the first window, the first information and the second information are distributed based on specified sorting, where the specified sorting is sorting of a time/place/category corresponding to the first media content and the second media content.

In this method, identification information of the media content in different terminals may be displayed in different areas of a same window, so that the user can browse the multi-terminal media content by category and determine a media data source. The media content in different terminals is displayed in a same window after being sorted, so that the user can browse the multi-terminal media content in a fusion manner.

In a possible design, the time/place/category corresponding to the first media content and the second media content meets a specified condition.

Based on this method, the application can separately present identification information of media content of a specific category, so that the user can view the media content of the specific category in a targeted manner.

According to a second aspect, an embodiment of this application provides an electronic device. The electronic device includes a display, a memory, and one or more processors. The memory is configured to store computer program code, and the computer program code includes computer instructions. When the computer instructions are executed by the one or more processors, the electronic device is enabled to perform the method according to any one of the first aspect or the possible designs of the first aspect.

According to a third aspect, an embodiment of this application provides a content management system, including a first electronic device and a second electronic device. The first electronic device includes a first service and a first application. The first electronic device is configured to: obtain first information and second information by using the first service, and store the first information and the second information, where the first information identifies first media content stored in the first electronic device, and the second information identifies second media content stored in the second electronic device; obtain the first information and/or the second information from the first service by using the first application; and display the first information and/or the second information by using the first application.

In a possible design, the second electronic device is a home storage device.

In a possible design, the first electronic device is further configured to: determine, by using the first application, to obtain the second media content; send a content obtaining request to the first service by using the first application, where the content obtaining request is used to request to obtain the second media content; and request, in response to the received content obtaining request by using the first service, to obtain the second media content from the second electronic device. The second electronic device is configured to send the second media content to the first service. The first electronic device is further configured to: receive the second media content from the second electronic device by using the first service, and send the second media content to the first application; and display the second media content after receiving the second media content by using the first application.

In a possible design, the first electronic device is configured to perform the method performed by the first electronic device in the method according to any one of the first aspect or the possible designs of the first aspect, and the second electronic device is configured to perform the method implemented by the second electronic device in the method according to any one of the first aspect or the possible designs of the first aspect.

According to a fourth aspect, this application provides a computer-readable storage medium. The computer-readable storage medium stores a computer program. When the computer program is run on a computer, the computer is enabled to perform the method according to any one of the first aspect or the possible designs of the first aspect.

According to a fifth aspect, this application provides a computer program product. The computer program product includes a computer program or instructions. When the computer program or the instructions are run on a computer, the computer is enabled to perform the method according to any one of the first aspect or the possible designs of the first aspect.

For beneficial effects of the second aspect to the fifth aspect, refer to descriptions of beneficial effects of the first aspect. Details are not described herein again.

### BRIEF DESCRIPTION OF DRAWINGS

FIG. 1 is a schematic diagram of a method for accessing and managing content in an HDC device by an electronic device;
FIG. 2 is a schematic diagram of a hardware architecture of an electronic device according to an embodiment of this application;
FIG. 3 is a schematic diagram of a software architecture of an electronic device according to an embodiment of this application;
FIG. 4 is a schematic diagram of an architecture of a possible system to which a solution according to an embodiment of this application is applicable;
FIG. 5 is a schematic diagram of an architecture of a possible system to which a solution according to an embodiment of this application is applicable;
FIG. 6 is a schematic diagram of a software architecture of a terminal device according to an embodiment of this application;
FIG. 7 is a schematic diagram of a synchronization scheme according to an embodiment of this application;
FIG. 8A and FIG. 8B are a schematic diagram of a downlink synchronization method according to an embodiment of this application;
FIG. 9A and FIG. 9B are a schematic diagram of an uplink synchronization method according to an embodiment of this application;
FIG. 10A and FIG. 10B are a schematic diagram of a content management method according to an embodiment of this application;
FIG. 11 is a schematic diagram of a gallery-based content synchronization and management method according to an embodiment of this application;
FIG. 12 is a schematic diagram of a fusion management method of content according to an embodiment of this application;
FIG. 13A and FIG. 13B are a schematic flowchart of a gallery-based content synchronization and management method according to an embodiment of this application;
FIG. 14a is a schematic diagram of an album interface according to an embodiment of this application;
FIG. 14b is a schematic diagram of an image interface according to an embodiment of this application;
FIG. 14c is a schematic diagram of a gallery control interface according to an embodiment of this application;
FIG. 14d is a schematic diagram of an image interface according to an embodiment of this application;
FIG. 14e is a schematic diagram of a gallery setting interface according to an embodiment of this application;
FIG. 14f is a schematic diagram of a gallery setting interface according to an embodiment of this application;
FIG. 15 is a schematic flowchart of a method for using content according to an embodiment of this application;
FIG. 16a is a schematic diagram of an application interface according to an embodiment of this application;
FIG. 16b is a schematic diagram of an interface for selecting an image source in an application according to an embodiment of this application;
FIG. 16c is a schematic diagram of an interface for selecting an image in an application according to an embodiment of this application;
FIG. 16d is a schematic diagram of an application interface according to an embodiment of this application;
FIG. 17 is a schematic diagram of a content management method according to an embodiment of this application; and
FIG. 18 is a schematic diagram of a structure of an electronic device according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The terms "first" and "second" below in descriptions of embodiments of this application are merely used for a description purpose, and shall not be understood as an indication or implication of relative importance or implicit indication of a quantity of indicated technical features. Therefore, a feature defined with "first " or "second" may explicitly indicate or implicitly include one or more such features.

For ease of understanding, concepts related to this application are described as examples for reference.

(1) An electronic device is a device having a wireless connection function. In some embodiments of this application, the electronic device is a device having a display function.

In some embodiments of this application, the electronic device may be a portable terminal device, for example, a mobile phone, a tablet computer, a wearable device (for example, a watch, a band, a helmet, or a headset) with a wireless communication function, an in-vehicle terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television or a smart speaker), a smart robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, a hot air balloon, an uncrewed aerial vehicle, or an aircraft). The wearable device is a portable device that can be directly worn by a user or integrated into clothes or accessories of the user.

In some embodiments of this application, the electronic device may further be a portable terminal device that further includes another function such as a personal digital assistant function and/or a music player function. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

(2) Metadata (metadata) is data (data about data) that describes data. The metadata is mainly information that describes properties (property) of objects such as data or information resources, and is descriptive data for the data or the information resources. The metadata may be used to support functions such as indicating a storage location, historical data, and a search record, to implement effective discovery, searching, integrated organization, and effective management of the data or the information resources. Media metadata is descriptive data of a media file such as a picture or a video. For example, metadata of a picture may include data used to indicate information such as a file name of the picture, a shooting time, a modification time, a shooting mode, a storage path of an original picture, a storage path of a thumbnail, and a file size.

(3) Synchronization means bidirectional data synchronization (including operations of addition, deletion, and modification) between two devices. In this embodiment of this application, synchronization means uplink synchronization and downlink synchronization of data between an electronic device and an HDC (device). The uplink synchronization means that metadata (for example, media metadata) on an electronic device side is uploaded to an HDC side, and data or resource information (for example, a media file) on the electronic device side is also uploaded to the HDC side. The downlink synchronization means that metadata on the HDC side is transmitted to the electronic device side, and data or resource information on the HDC side is transmitted to the electronic device side.

For example, an electronic device 1 (for example, a mobile phone) may synchronize a photo to the HDC through uplink synchronization, and an electronic device 2 (for example, a tablet) may obtain, from the HDC through downlink synchronization, a photo synchronized from the electronic device to the HDC. Similarly, the electronic device 1 may also obtain a photo synchronized from the electronic device 2 to the HDC. Therefore, through bidirectional synchronization, same photo content can be viewed on the electronic device 1 and the electronic device 2.

(4) An application package (application package, APK) is an application package file format used by an operating system for distribution and installation of mobile applications and middleware. To run code of an application program on an electronic device, the code needs to be compiled first, and then packaged into a file that can be identified by the operating system, so that the code can be run. The file format that can be identified and run by the operating system is an APK.

(5) A software development kit (software development kit, SDK) is a collection of development tools used to create application software for a specific software package, a software framework, a hardware platform, an operating system, and the like. A common SDK includes utilities for debugging and other purposes, which can simply provide some files of an application programming interface for a particular programming language, and can also provide complex hardware that can communicate with a particular embedded system. The SDK also often includes sample code, supporting technical notes, or other supporting documents that clarify doubts for primary reference material. A collection of documents, examples, and tools that assist in developing a type of application software can be referred to as an SDK.

It should be understood that, in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or similar expressions refer to any combination of these items, including any combination of single items or a plurality of items. For example, at least one of a, b, or c may indicate a, b, c, a and b, a and c, b and c, or a, b, and c, where a, b, and c may be singular or plural.

Currently, an electronic device may store or back up data content (for example, media content) by using an external storage device such as a cloud storage device or an HDC device. However, the electronic device can access and manage content in the external storage device only after downloading an app that matches the external storage device, which is different from a manner in which the electronic device directly accesses data content that is stored locally. Therefore, the current electronic device cannot access local content of the electronic device and content in the external storage device at the same time in a convenient and efficient manner.

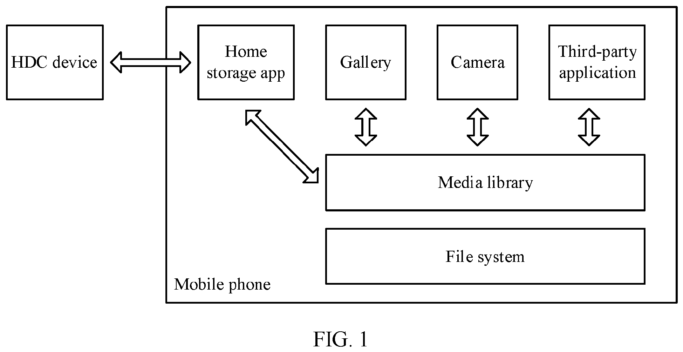

FIG. 1 is a schematic diagram of a method for accessing and managing content in an HDC device by an electronic device. As shown in FIG. 1, an example in which the electronic device is a mobile phone and the external storage device is an HDC device is used. The HDC device is a large-capacity storage device deployed in a home network, and has a capability of backing up and synchronizing content of a plurality of devices, to implement functions such as long-term reliable storage of data content and convenient personal access and management anytime and anywhere. A home storage app (matching the HDC) may be installed in the mobile phone, and the mobile phone interacts with the HDC device by using the home storage app, to send media content in the mobile phone to the HDC device for storage or backup, and browse and manage content in the HDC device. Only the home storage app can access content in the HDC device, and another app such as Camera, Gallery, or a third-party application cannot directly access content in the HDC device. Therefore, if the user needs to view and share the content in the HDC device by using the another application in the mobile phone, the user needs to find corresponding content from the HDC device by using the home storage app, manually download the corresponding content to a media library in a local media framework, and then obtain the corresponding content from the local media library by using the another application. Based on this, the user needs to use two apps to view the content in the HDC device. An operation process is complex and cumbersome, and use efficiency and user experience are low. In addition, the user may directly access, by using the another application in the mobile phone, content locally stored in the electronic device. Therefore, for the content in the HDC device and the local content of the electronic device, the electronic device needs to perform processing such as access in two different manners, and cannot implement fusion access to the local content and the content in the HDC device. Consequently, an operation process of accessing the content by the electronic device is more complex, and efficiency of accessing and managing different content by the electronic device and user experience are reduced.

In view of the foregoing problems, embodiments of this application provide a content management method, an electronic device, and a system, to improve efficiency of accessing stored multi-terminal content by an electronic device, and improve user experience.

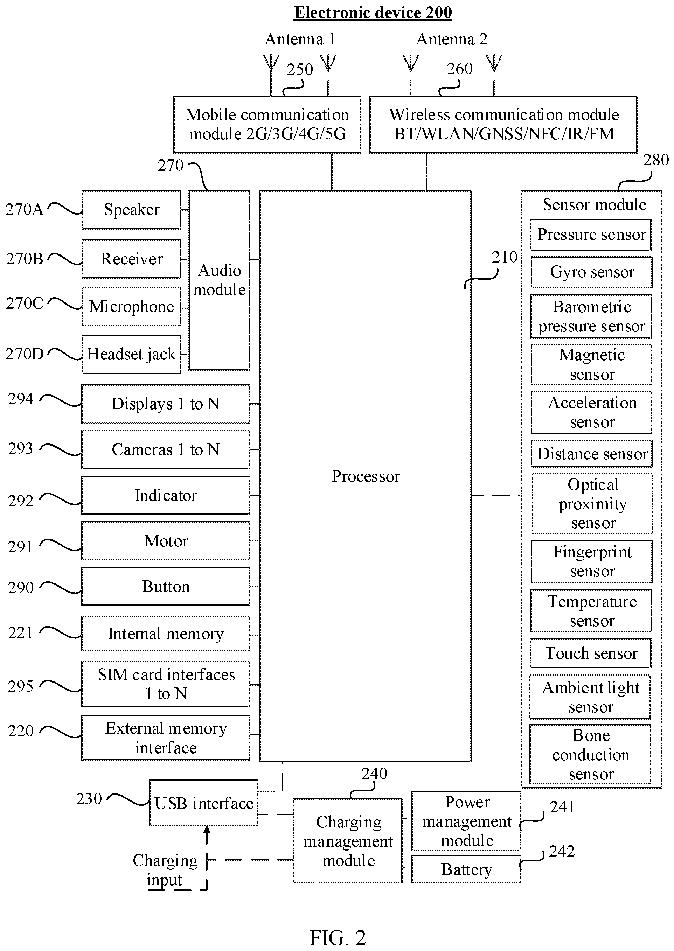

The following first describes, with reference to FIG. 2, a structure of an electronic device to which a method provided in an embodiment of this application is applicable.

As shown in FIG. 2, the electronic device 200 may include a processor 210, an external memory interface 220, an internal memory 221, a USB interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like.

The sensor module 280 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 200 shown in FIG. 2 is merely an example, and does not constitute a limitation on the electronic device. In addition, the electronic device may have more or fewer components than those shown in the figure, or may combine two or more components, or may have different component configurations. The various components shown in FIG. 2 may be implemented in hardware including one or more signal processing circuits and/or application-specific integrated circuits, software, or a combination of hardware and software.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 200. The controller may generate an operation control signal based on instruction operation code and a time sequence signal, to complete control of instruction fetching and instruction execution.

A memory may be further disposed in the processor 210, and is configured to store instructions and data. In some embodiments, the memory in the processor 210 is a cache memory. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

Execution of the content management method provided in this embodiment of this application may be controlled by the processor 210 or completed by invoking another component. For example, the processor 210 invokes a processing program stored in the internal memory 221 in this embodiment of this application, or invokes, by using the external memory interface 220, a processing program stored in a third-party device in this embodiment of this application, to control the wireless communication module 260 to perform data communication with another device, thereby improving intelligence and convenience of the electronic device 200 and improving user experience. The processor 210 may include different components. For example, when a CPU and a GPU are integrated, the CPU and the GPU may cooperate to perform the content management method provided in this embodiment of this application. For example, in the content management method, some algorithms are performed by the CPU, and other algorithms are performed by the GPU, to achieve high processing efficiency.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 294, where N is a positive integer greater than 1. The display 294 may be configured to display information entered by a user or information provided to a user, and various graphical user interfaces (graphical user interface, GUI). For example, the display 294 may display a photo, a video, a web page, a file, or the like.

In this embodiment of this application, the display 294 may be one integrated flexible display, or may be a spliced display including two rigid screens and one flexible screen located between the two rigid screens.

The camera 293 (a front-facing camera, a rear-facing camera, or a camera that may serve as both a front-facing camera and a rear-facing camera) is configured to capture a static image or a video. Usually, the camera 293 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 221 may be configured to store computer-executable program code, where the executable program code includes instructions. The processor 210 runs the instructions stored in the internal memory 221, to perform various functional applications and data processing of the electronic device 200. The internal memory 221 may include a program storage area and a data storage area. The program storage area may store an operating system, code of an application (for example, a content processing function), and the like. The data storage area may store data created during use of the electronic device 200, and the like.

The internal memory 221 may further store one or more computer programs corresponding to an algorithm of the content management method provided in this embodiment of this application. The one or more computer programs are stored in the internal memory 221 and are configured to be executed by the one or more processors 210. The one or more computer programs include instructions, and the instructions may be used to perform steps in the following embodiments.

In addition, the internal memory 221 may include a high-speed random access memory, and may further include a non-volatile memory, for example, at least one magnetic disk storage device, a flash memory device, or a universal flash storage (universal flash storage, UFS).

Certainly, code of the algorithm of the content management method provided in this embodiment of this application may alternatively be stored in an external storage. In this case, the processor 210 may run, by using the external memory interface 220, the code of the algorithm of the content management method stored in the external memory.

The sensor module 280 may include a gyro sensor, an acceleration sensor, an optical proximity sensor, a fingerprint sensor, a touch sensor, and the like.

The touch sensor is also referred to as a "touch panel". The touch sensor may be disposed in the display 294, and the touch sensor and the display 294 form a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided through the display 294. In some other embodiments, the touch sensor may be alternatively disposed on a surface of the electronic device 200, at a location different from that of the display 294.

For example, the display 294 of the electronic device 200 displays a home screen, and the home screen includes icons of a plurality of applications (for example, a camera application and a gallery application). The user taps an icon of the camera application on the home screen by using the touch sensor, to trigger the processor 210 to start the camera application and turn on the camera 293. The display 294 displays an interface of the camera application, for example, a viewfinder interface.

A wireless communication function of the electronic device 200 may be implemented by using the antenna 1, the antenna 2, the mobile communication module 250, the wireless communication module 260, a modem processor, a baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 250 may provide wireless communication solutions that are applied to the electronic device 200 and that include 2G/3G/4G/5G wireless communication solutions and the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules of the mobile communication module 250 may be disposed in the processor 210. In some embodiments, at least some functional modules of the mobile communication module 250 and at least some modules of the processor 210 may be disposed in a same device. In this embodiment of this application, the mobile communication module 250 may be further configured to exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transmits the low frequency baseband signal obtained through demodulation to the baseband processor for processing. After being processed by the baseband processor, the low frequency baseband signal is transmitted to the application processor. The application processor outputs a sound signal by using an audio apparatus (not limited to the speaker 270A, the receiver 270B, or the like), or displays an image or a video by using the display 294. In some embodiments, the modem processor may be an independent component. In some other embodiments, the modem processor may be independent of the processor 210, and the modem processor and the mobile communication module 250 or another functional module may be disposed in a same device.

The wireless communication module 260 may provide a wireless communication solution that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2. In this embodiment of this application, the wireless communication module 260 is configured to establish a connection to another electronic device, and exchange data. Alternatively, the wireless communication module 260 may be configured to access an access point device, send a control instruction to another electronic device, or receive data sent by another electronic device.

For example, when the terminal device in this embodiment of this application is implemented by using a hardware architecture shown in FIG. 2, the terminal device may receive or send content such as information and a data file by using the mobile communication module 250 or the wireless communication module 260, to implement functions such as establishing a communication connection to the HDC device and performing uplink and downlink synchronization.

In addition, the electronic device 200 may implement an audio function, for example, music playing and recording, by using the audio module 270, the speaker 270A, the receiver 270B, the microphone 270C, the headset jack 270D, the application processor, and the like. The electronic device 200 may receive an input of the button 290, and generate a button signal input related to user setting and function control of the electronic device 200. The electronic device 200 may generate a vibration prompt (for example, an incoming call vibration prompt) by using the motor 291. The indicator 292 in the electronic device 200 may be an indicator light, may be configured to indicate a charging state and a battery level change, and may be further configured to indicate a message, a missed call, a notification, and the like. The SIM card interface 295 in the electronic device 200 is configured to connect to a SIM card. The SIM card may be inserted into the SIM card interface 295 or removed from the SIM card interface 295, to implement contact with or separation from the electronic device 200.

It should be understood that in actual application, the electronic device 200 may include more or fewer components than those shown in FIG. 2. This is not limited in this embodiment of this application. The electronic device 200 shown in the figure is merely an example, and the electronic device 200 may have more or fewer components than those shown in the figure, may combine two or more components, or may have different component configurations. The various components shown in the figure may be implemented in hardware including one or more signal processing circuits and/or application-specific integrated circuits, software, or a combination of hardware and software.

A software system of the electronic device 200 may use a layered architecture, an event-driven architecture, a microkernel architecture, a micro service architecture, or a cloud architecture. In embodiments of this application, an Android system with a layered architecture is used as an example for describing a software structure of the electronic device.

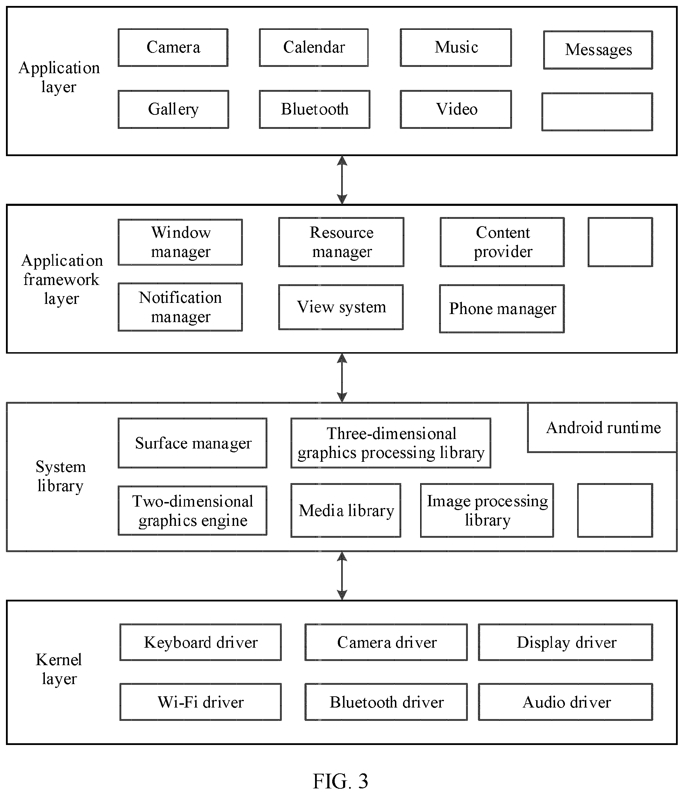

The layered architecture divides software into several layers, and each layer has a clear role and responsibility. The layers communicate with each other through a software interface. As shown in FIG. 3, the software architecture may be divided into four layers: an application layer, an application framework layer (framework, FWK), an Android runtime and system library, and a Linux kernel layer from top to bottom.

The application layer is an uppermost layer of the operating system, and includes native applications of the operating system, such as Camera, Gallery, Calendar, Bluetooth, Music, Video, and Messages. An application (application, APP) in embodiments of this application is a software program that can implement one or more specific functions. Usually, a plurality of applications, such as a camera application, a mailbox application, and a smart home device control application, may be installed in the electronic device. The application mentioned in the following may be a system application installed before delivery of the electronic device, or may be a third-party application downloaded from a network or obtained from another electronic device by a user in a process of using the electronic device.

Certainly, a developer may compile an application and install the application at the layer. In a possible implementation, the application may be developed by using a Java language, and is completed by invoking an application programming interface (application programming interface, API) provided by an application framework layer. A developer may interact with a bottom layer (for example, a hardware abstraction layer or a kernel layer) of an operating system by using the application framework, to develop an application of the developer.

The application framework layer provides an API and a programming framework for an application at the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include information such as a file (for example, a document, a video, an image, or audio), and a text.

The view system includes visual controls, for example, controls that display content such as text, a picture, and a document. The view system may be configured to construct an application. An interface in a display window may be formed by one or more views. For example, a display interface including a notification icon of Messages may include a view for displaying text and a view for displaying a picture.

The phone manager is configured to provide a communication function of the electronic device. The notification manager enables an application to display notification information in the status bar, and may be configured to convey a notification-type message. The displayed information may automatically disappear after a short pause without user interaction.

The Android runtime includes a core library and a virtual machine. The Android runtime is responsible for scheduling and management of the Android system.

The kernel library of the Android system includes two parts: one part is a function that needs to be invoked in a Java language, and the other part is the kernel library of the Android system. The application layer and the application framework layer run on the virtual machine. Java is used as an example. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), and a two-dimensional graphics engine (for example, SGL). The surface manager is configured to manage a display subsystem and provide a fusion of two-dimensional and three-dimensional layers for a plurality of application programs. The media library supports playback and recording in a plurality of commonly used audio and video formats, static image files, and the like. The media library may support a plurality of audio and video coding formats, such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel (kernel) layer provides a core system service of the operating system. For example, security, memory management, process management, a network protocol stack, and a driver model are all based on the kernel layer. The kernel layer is also used as an abstraction layer between hardware and software stacks. The layer has many drivers related to the electronic device, and has the following main drivers: a display driver, a keyboard driver used as an input device, a flash driver based on a memory technology device, a camera driver, an audio driver, a Bluetooth driver, a Wi-Fi driver, and the like.

It should be understood that the foregoing function service is merely an example. In actual application, the electronic device may be divided into more or fewer function services based on another factor, or may be divided into functions of each service in another manner, or may not be divided into function services, but work as a whole.

The following describes in detail the solutions provided in this application with reference to specific embodiments.

The solutions provided in embodiments of this application may be applied to a system including at least one electronic device and an external storage device. The external storage device is configured to provide services such as content storage, backup, and synchronization for the at least one electronic device. The external storage device may be, for example, an HDC device or a cloud server. Each electronic device may synchronize content of the electronic device to the external storage device in an uplink manner, to store or back up the content of the electronic device to the external storage device. In addition, the external storage device may synchronize stored content to each electronic device in a downlink manner, so that each electronic device can view and manage content in the external storage device (including content of the electronic device and content of some other electronic devices that are stored in the external storage device), and the like. The content in the external storage device or the electronic device may be various data, resources, or information, for example, may be media content such as an image, a video, audio, or a file.

It should be noted that, in this embodiment of this application, the synchronizing content of the external storage device to the electronic device specifically means transmitting metadata of the content stored in the external storage device to the electronic device for storage. Based on the metadata, the electronic device may obtain the corresponding content from the external storage device at any time. In this embodiment of this application, the synchronizing content of the electronic device to the external storage device means transmitting the content stored in the electronic device and metadata of the content to the external storage device for storage. The metadata is data used to describe content in an electronic device or an external storage device, and content described by metadata may be obtained based on the metadata.

In this embodiment of this application, the external storage device may communicate with the at least one electronic device in a wired or wireless communication manner. Optionally, the external storage device and the electronic device may access a same local area network, or may access different local area networks.

For example, the external storage device and the electronic device establish wireless connections to a same wireless access point. The external storage device and the electronic device can also access a same wireless fidelity (wireless fidelity, Wi-Fi) hotspot. For another example, the external storage device and the electronic device may also access a same Bluetooth beacon by using a Bluetooth protocol. For another example, the external storage device and the electronic device may also trigger a communication connection by using a near field communication (near field communication, NFC) tag, and transmit encrypted information by using a Bluetooth module to perform identity authentication. After authentication succeeds, data is transmitted in a point-to-point (point to point, P2P) manner.

The following describes the solutions provided in embodiments of this application by using an example in which the electronic device is a terminal device and the external storage device is an HDC device.

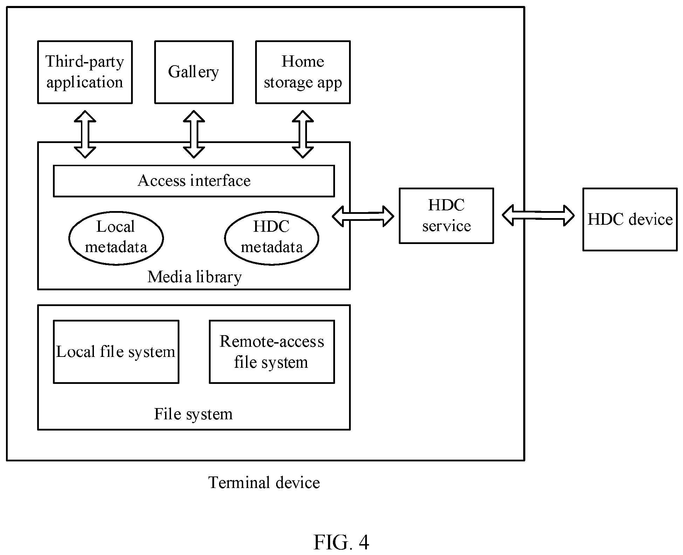

For example, FIG. 4 is a schematic diagram of an architecture of a possible system to which a solution according to an embodiment of this application is applicable. As shown in FIG. 4, the system includes at least an HDC device and a terminal device (for example, a mobile phone). A system application (for example, Gallery shown in FIG. 4) and a third-party application may be installed in the terminal device. The terminal device further includes an HDC service, a media library, and a file system.

The HDC service is used to implement uplink and downlink synchronization of content between the terminal device and the HDC device. The file system may be used to store content of the terminal device and content synchronized by the terminal device from the HDC device. In one aspect, the media library may be used to manage content stored in the terminal device, for example, data and files of the system application and the third-party application in the terminal device. In addition, the media library may be used to manage content synchronized by the terminal device from the HDC device. In addition, the media library can provide an HDC synchronization interface for the HDC service and an access interface for the system application and the third-party application. In this case, the HDC service can invoke the HDC synchronization interface to interact with the media library, to implement uplink and downlink synchronization of content. The system application and the third-party application may access content managed by the media library through the access interface, so that the system application and the third-party application can perform fusion access and management on the local content of the terminal device and the content synchronized from the HDC device, thereby improving access efficiency and user experience. Optionally, a home storage app may be further installed in the terminal device, and the home storage app may also be used to access and manage the HDC device and content stored in the HDC device.

Optionally, in the system shown in FIG. 4, both the HDC device and the terminal device may be implemented by using the hardware architecture shown in FIG. 2 and the software architecture shown in FIG. 3.

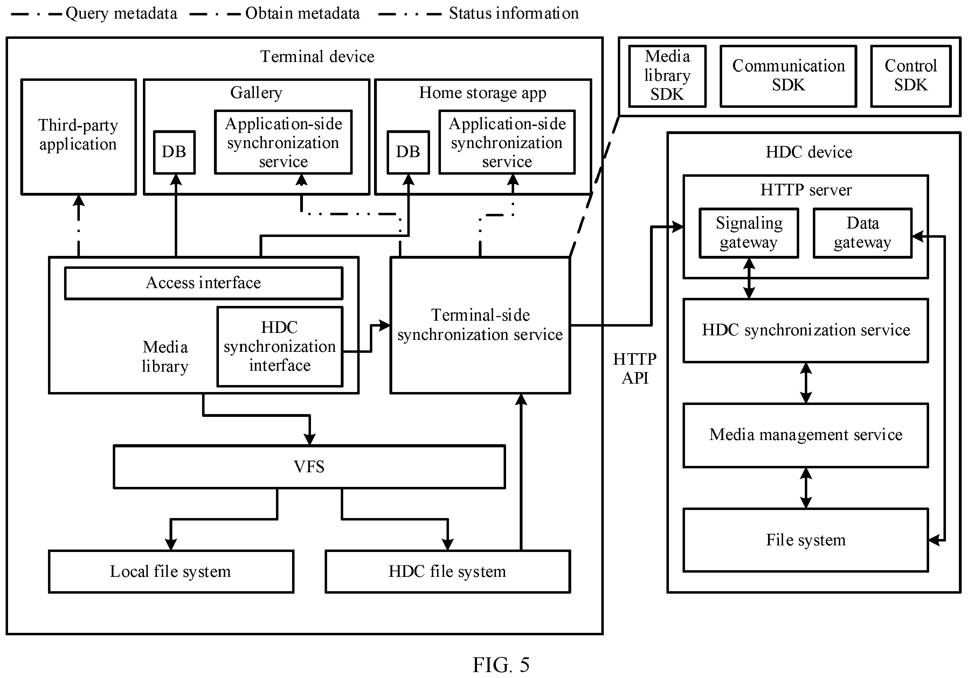

Further, as shown in FIG. 5, the HDC service of the terminal device in the system shown in FIG. 4 may include two sub-services, namely, an application-side synchronization service and a terminal-side synchronization service. The application-side synchronization service may be deployed in a home storage app or a specified system application (for example, a gallery application shown in FIG. 5) in a form of a software development kit (software development kit, SDK). The terminal-side synchronization service may be deployed in a software-layer architecture of the terminal device in a form of an application package (application package, APK).

The application-side synchronization service mainly provides the following functions:
(1) Provide a synchronization status notification
   The application-side synchronization service may obtain information about a progress and a state of uplink and downlink synchronization between the terminal device and the HDC device from the terminal-side synchronization service, and may notify the user of the information, so that the user can learn the information about the progress and state of synchronization between the terminal device and the HDC device in a timely manner.
(2) Provide a download API of content and a download progress notification
   The application-side synchronization service may obtain a download API of content (including the content stored in the HDC device and the content locally stored in the terminal device) from the terminal-side synchronization service or the media library, so that an application in which the application-side synchronization service is located can invoke the download API to drive the terminal-side synchronization service to download corresponding content from the HDC device. In addition, the application-side synchronization service may receive a download progress callback notification from the terminal-side synchronization service. The download progress callback notification indicates a progress of synchronization between the terminal-side synchronization service and the HDC device. The application-side synchronization service may notify the user of the progress by using a corresponding notification message.
(3) Provide a synchronization control entry
   The application-side synchronization service may provide a control switch for a user to control a synchronization procedure between the terminal device and the HDC device, and provide the control switch for the user, so that the user can control the synchronization procedure between the terminal device and the HDC device by operating the control switch.

For example, an application-side synchronization service in the gallery application may provide a gallery synchronization switch for the user, and the gallery control switch is used to control an image and video synchronization procedure between the terminal device and the HDC device. When the user turns on the gallery synchronization switch, the terminal device may perform uplink and downlink synchronization between the terminal device and the HDC device for an image and a video, thereby ensuring consistency of image and video content between the terminal device and the HDC device. When the user turns off the gallery synchronization switch, the terminal device may stop performing uplink and downlink synchronization of image and video content with the HDC device.

The terminal-side synchronization service provides the following functions:
(1) Synchronization function
   The terminal-side synchronization service can implement uplink and downlink content synchronization between the terminal device and the HDC device. For example, the terminal-side synchronization service may include a media library SDK. The SDK may invoke an Ethernet (E) interface to interact with the media library, to send content obtained by the terminal-side synchronization service from the HDC device to the media library, and the media library stores the content, thereby implementing downlink synchronization. The SDK can also provide an Android interface definition language (Android interface definition language, AIDL) interface for interacting with the media library. The AIDL interface can obtain content from the media library, and the content may be sent to the HDC device by the terminal-side synchronization service for storage. When uplink and downlink synchronization is performed between the terminal device and the HDC device, metadata may be transmitted in an objectized data format. That is, the terminal device or the HDC device performs objectization processing on to-be-transmitted metadata, and then transmits the to-be-transmitted metadata to a peer device.
(2) Communication function
   The terminal-side synchronization service can implement interaction processes such as discovery, connection establishment, communication, and data transmission between the terminal device and the HDC device. For example, the terminal-side synchronization service may include a communication SDK, for example, an SDK that fuses HiLink and P2P functions. The SDK may establish a data transmission channel with the HDC device based on HiLink and P2P communication manners, to implement data transmission in an uplink and downlink synchronization process. The SDK may further parse transmitted data and then assemble the data into VO data of a media library SDK, and invoke an interface provided by the media library SDK to update the VO data to the media library.
(3) Control function
   The terminal-side synchronization service can control the uplink and downlink synchronization procedure between the terminal device and the HDC device. For example, the terminal-side synchronization service may include a control SDK. The SDK may receive a data change message (used to notify a change of data in the HDC device) from the HDC device, and then start the uplink and downlink synchronization procedure according to the received data change message.

In some embodiments of this application, as shown in FIG. 5, the file system of the terminal device may include a local file system and an HDC file system. The local file system is used to store content of the terminal device, and the HDC file system is used to store content synchronized by the terminal device from the HDC device. The HDC file system can be implemented by using a file system in user space (filesystem in userspace, FUSE) or a distributed file system. The local file system and the HDC file system can use a virtual file system (virtual file system, VFS) as an interface to interact with the media library and the HDC synchronization service.

In some embodiments of this application, as shown in FIG. 5, the HDC device may include a Hypertext Transfer Protocol (hypertext transfer protocol, HTTP) server, an HDC synchronization service, a media management service, and a file system. The HTTP server may complete interaction with the HDC synchronization service of the terminal device by using a signaling gateway, or may complete interaction with the file system by using a data gateway, thereby reading and writing data from the file system. The HDC synchronization service of the HDC device can implement a function related to the synchronization between the HDC device and the terminal device, and manage the HTTP server and the media management service. The media management service is used to manage content stored in the file system. The file system is used to store content.

Further, when the terminal device uses the software system shown in FIG. 3, the media library, the HDC service, the file system, and the like in the terminal device may be deployed at the application framework layer shown in FIG. 3. Certainly, these service structures may alternatively be deployed at another software layer based on an actual requirement. This is not specifically limited in this embodiment of this application.

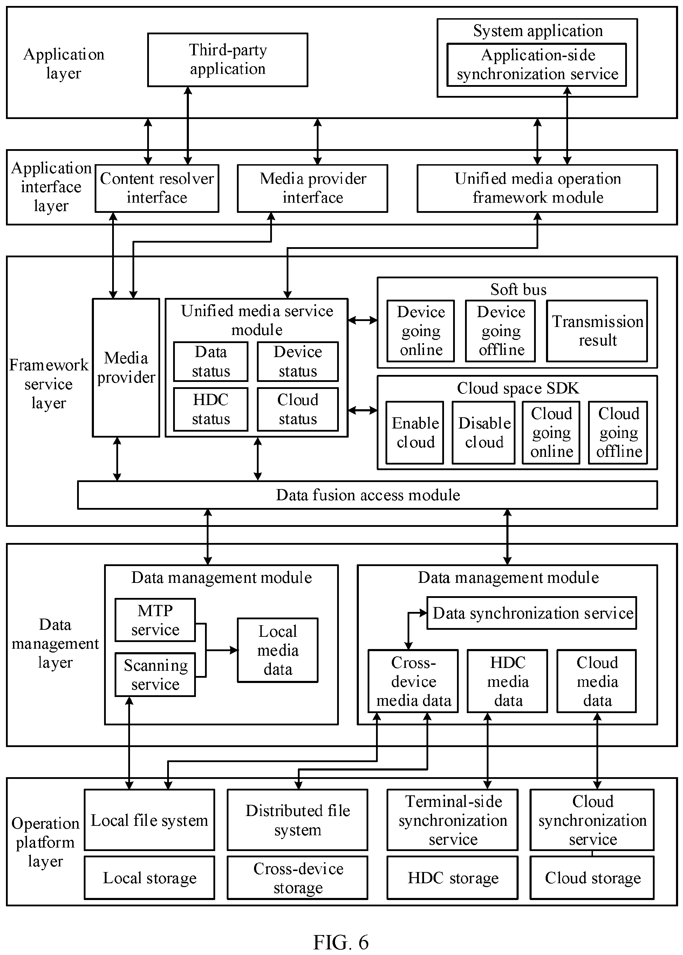

For example, refer to FIG. 6. The application framework layer shown in FIG. 3 may further include an application interface layer (ML interface), a framework service layer (ML framework), a data management layer (ML adapter), and an operation platform layer.

The application interface layer may include a unified media operation framework module (an identifier may be MediaLibrarySDK), a content resolver (content resolver) interface, a media provider (media provider) interface, and the like.

The unified media operation framework module may provide a unified interface, encapsulate content objects, and the like, and may shield a database operation, making a use process simple and flexible. An Android application can access content (including local, cloud, and DHC content) in the terminal device through an Android native interface without adaptation. A HarmonyOS application can access content (including local and distributed file system content) of the terminal device by using a unified interface provided by the HarmonyOS application.

Specifically, the unified media operation framework module may provide a unified northbound interface for the application layer, so that an app can invoke the unified northbound interface, thereby implementing a specific content (for example, media data) management function. When content processed by the terminal device is media data, the unified media operation framework module may provide a media object query interface and a media object change interface. The media object query interface may implement a function of querying metadata, a thumbnail, and a content file of content such as a media resource and a media file. The media object change interface can implement functions such as notifying a change of a media object, changing/canceling subscription, and comparing media object changes. To sum up, the unified media operation framework module may encapsulate an object such as a media resource, unify local and distributed media object access capabilities, shield access differences and implementation details of various media metadata and media data, and provide rich, unified, and layered media data management interfaces, thereby implementing simple and efficient content management functions.

The content resolver interface and the media provider interface may be used by the system application or the third-party application to access content of the media provider.

The framework service layer may include a unified media service module (an identifier may be MediaLibraryService), a media provider, a data fusion access module (an identifier may be MediaLibraryFusion), and the like.

The unified media service module can provide an event management capability related to the local, the cloud, the distributed file system, and the HDC device, receive various event information, and trigger a corresponding service logic operation. In addition, the unified media service module can further provide transmission and management capabilities for media resources on the local, the distributed file system, the cloud, and the HDC device, and supports status management of media resources based on a connection status between the terminal device and the cloud and the HDC device. In this way, media service management and fusion management and access of media resources on the local, distributed file system, cloud, and HDC device are implemented. The module can interact with a distributed soft bus, a cloud space SDK, and the application-side synchronization service, to implement cross-device synchronization of media metadata between the distributed file system, cloud space, and the HDC device, and real-time detection and fusion access of media data status. Functions provided by the module may include device discovery, device status (including a distributed device, a cloud device, and the HDC device) monitoring, media data status monitoring, media metadata synchronous transmission, media resource operation, and media content transmission and caching.

The media provider may be used to store local content or content-related information, such as metadata, synchronized from the HDC device.

The data fusion access module is mainly used to implement a function of media data fusion access. Specific functions provided by the data fusion access module include the following: access to a single metadata table, fusion access to a plurality of tables of a metadata view, and fusion access to a plurality of databases of a metadata view. The module can implement access to (including creating, deleting, modifying, and viewing) media metadata locally, on the distributed device, and on the cloud, and can decouple a database from a service application layer.

The data management layer may include a synchronization data management module (an identifier may be MediaLibraryDataBase), a local data management module, a synchronization module, and the like.

The synchronization data management module may be used as a media provider of the distributed device/the cloud/the HDC device, to implement a corresponding media data management function. The module may be used to implement full, incremental, and real-time synchronization of the distributed device/the cloud/the HDC device database, message-triggered synchronization, insertion of synchronization data of the distributed device/the cloud/the HDC device database, and the like.

The local data management module may serve as a media provider of local content, and provide a function such as local media data management.

The synchronization module may include services, for example, a terminal-side synchronization service and a cloud synchronization service, that can synchronize content with different device sides. The terminal-side synchronization service is used to synchronize content with the HDC device.

An operating system (operating system, OS) platform layer may include a system used to store content, for example, the local file system, the distributed file system, the HDC file system, and a cloud file system. The HDC file system is used to store content obtained by the terminal device from the HDC device.

It should be noted that the device system architecture described in FIG. 4 to FIG. 6 is merely an example of a system architecture applicable to the terminal device provided in embodiments of this application, and does not constitute a limitation on the system architecture of the terminal device in embodiments of this application. In actual application, the system architecture used by the terminal device is not limited thereto.

The solutions provided in embodiments of this application are mainly divided into two parts, namely, content synchronization and content access. The content synchronization mainly includes a method for synchronizing content between a terminal device and an HDC device. Based on the method, it can be ensured that the terminal device side can learn content stored in the HDC device, and content on the terminal device side can be stored in the HDC device. The content access part mainly includes a method for a system application or a third-party application in a terminal device to access content stored in an HDC device. Based on the method, the system application or the third-party application in the terminal device may easily and quickly obtain content stored in the HDC device without the help of a home storage app or manual intervention, thereby improving access efficiency and user experience. Detailed descriptions are separately provided below.

### 1. Content synchronization

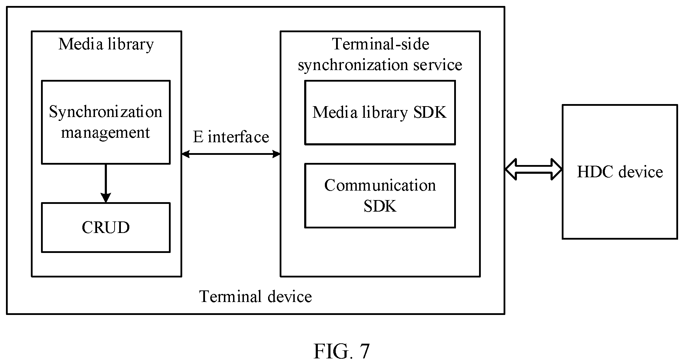

Refer to FIG. 7. Modules or components involved in the content synchronization mainly include a media library of a terminal device, a terminal-side synchronization service in an HDC service, and an HDC device. The media library and the terminal-side synchronization service may communicate with each other through an E interface. The terminal-side synchronization service may communicate with the HDC device in a P2P manner. The terminal-side synchronization service may synchronize content with the HDC device by using a communication SDK, and may update, to the media library through the E interface by using a media library SDK, the content synchronized with the HDC device, so that the media library can perform corresponding processing such as creating, retrieving, updating, and deleting (create, retrieve, update, delete, CRUD) operations.

The content synchronization between the terminal device and the HDC device may be classified into an uplink synchronization process and a downlink synchronization process. The uplink synchronization process means that content in the terminal device is synchronized to the HDC device. The downlink synchronization process means that content in the HDC device is synchronized to the terminal device.

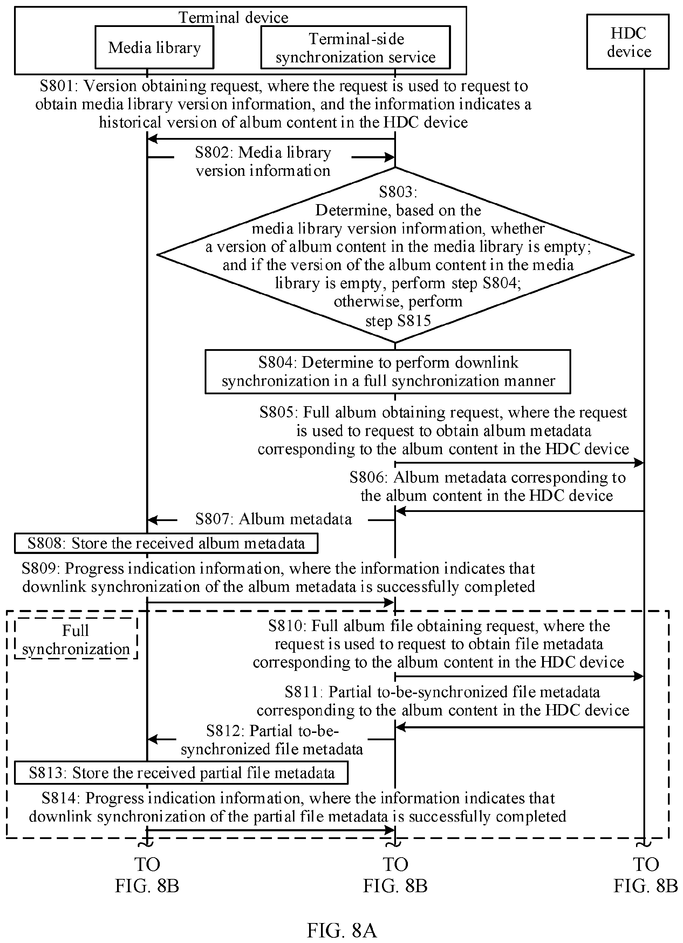

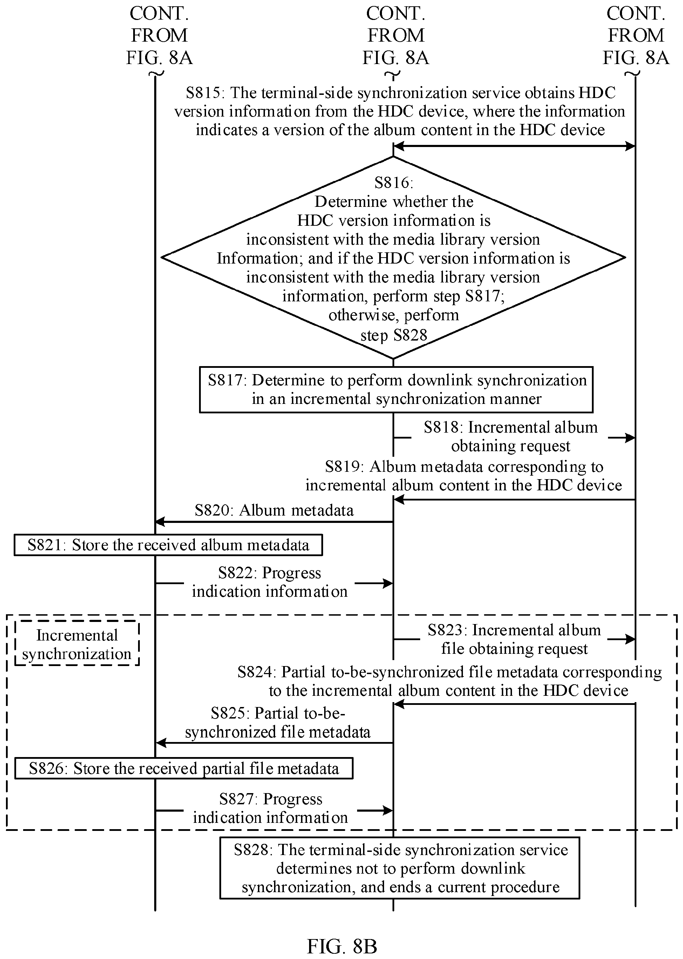

Refer to FIG. 8A and FIG. 8B. An example in which content synchronized between the terminal device and the HDC device is album content is used. A method for a downlink synchronization process may include the following steps.

S801: The terminal-side synchronization service sends a version obtaining request to the media library of the terminal device, where the request is used to request to obtain media library version information, and the information indicates a historical version of album content in the HDC device.

The terminal-side synchronization service may periodically trigger performing of step S801 and subsequent steps, to periodically determine whether downlink synchronization needs to be performed. When it is determined that the downlink synchronization needs to be performed, a corresponding downlink synchronization process is performed.

The media library version information indicates a version of album content in the HDC device after a previous synchronization process. The HDC device may indicate version information of downlink synchronized content to the terminal device in a previous downlink synchronization process, and a medium of the terminal device stores the version information as the media library version information. During the downlink synchronization, the media library may determine historical version information of the HDC device based on the media library version information, to determine, based on the historical version information and latest version information of the HDC device, whether the content in the HDC device is updated.

S802: The media library sends the media library version information to the terminal-side synchronization service.

S803: The terminal-side synchronization service determines, based on the media library version information, whether a version of album content in the media library is empty; and if the version of the album content in the media library is empty, performs step S804; otherwise, performs step S815.

If the version of the album content in the media library is empty, it indicates that the album content in the HDC device has not been synchronized to the terminal device before, or the album content previously synchronized by the terminal device from the HDC device has been cleared. In this case, the terminal-side synchronization service may determine that a downlink synchronization manner is a full synchronization manner, and the downlink synchronization may be performed in the full synchronization manner. That is, all album content in the HDC device is synchronized to the media library of the terminal device.

If the version of the album content in the media library is not empty, the terminal-side synchronization service further determines whether the album content in the HDC device is updated relative to the album content in the media library. If the album content in the HDC device is updated relative to the album content in the media library, it is determined that the downlink synchronization is performed in an incremental synchronization manner. That is, content in the HDC device that is updated relative to content in the media library is synchronized to the media library, to ensure that the content in the media library is updated with update of the content in the HDC device. Otherwise, it is determined that the downlink synchronization is not performed, and a current procedure may be stopped.

When determining whether the album content in the HDC device is updated relative to the album content in the media library, the terminal-side synchronization service may obtain version information of the album content in the HDC device from the HDC device, and compare the version information with the media library version information. If the two pieces of version information are inconsistent, it is determined that the album content in the HDC device is updated. Otherwise, it is determined that the album content in the HDC device is not updated relative to the album content in the media library. For specific execution, refer to step S815 and subsequent steps in the following.

In some embodiments of this application, the content stored in the HDC device may be classified into different types of content based on a data type, a data level, a data source, a data amount, or other features. After the classification, transmission or other processing may be separately performed on the different types of content. Therefore, in a downlink synchronization process, the terminal device and the HDC device may separately synchronize the different types of content, and the different types of content may be transmitted through different interfaces in the synchronization process.

For example, during downlink synchronization of album content between the terminal device and the HDC device, the terminal device and the HDC device may classify the album content into albums and media files (pictures and videos) in the albums according to levels. In this case, metadata corresponding to the album content is classified into album metadata and file metadata. The album metadata indicates attribute information of an album, for example, identification information of the album, a quantity of images or videos included in the album, and a storage location of the album. The file metadata indicates information about an image or a video in an album, for example, identification information, a storage location, and a file size of the image or the video. In the downlink synchronization process, the terminal device and the HDC device may independently transmit the album metadata and the file metadata.

Further, considering a data amount of synchronized content, the terminal device and the HDC device may further complete full synchronization in a breakpoint continuous transmission manner. Specifically, the terminal-side synchronization service of the terminal device may set a synchronization progress identifier to record a progress of a synchronization process. The synchronization progress identifier may include two factors: a progress identifier (unique ID) and a time identifier (time ID). The progress identifier is used to record an offset of synchronized content. Based on the offset, content that has been synchronized and content that is to be synchronized may be determined. The time identifier is used to record information about a time at which synchronization is performed. In a breakpoint continuous transmission process, the terminal-side synchronization service of the terminal device updates and stores a corresponding synchronization progress identifier locally each time after obtaining content from the HDC device for storage by the media library. If interruption occurs in the synchronization process, when the synchronization process starts again, the terminal-side synchronization service may determine a synchronization progress based on a stored synchronization progress identifier, and continue to obtain to-be-synchronized content from the HDC device based on the progress and store the content in the media library. After the full synchronization is completed, the terminal-side synchronization service may set the synchronization progress identifier to mark that the full synchronization is completed.

When the version of the album content in the media library is empty, refer to steps S804 to S814 for a corresponding processing manner. When the version of the album content in the media library is not empty, refer to steps S815 to S827 for a corresponding processing manner. For a downlink synchronization process in a full synchronization manner, refer to steps S805 to S814. For a downlink synchronization process in an incremental synchronization manner, refer to steps S818 to S827.

S804: The terminal-side synchronization service determines to perform downlink synchronization in a full synchronization manner. Steps S805 to S814 are performed.

S805: The terminal-side synchronization service sends a full album obtaining request to the HDC device, where the request is used to request to obtain album metadata corresponding to the album content in the HDC device.

S806: The HDC device sends the album metadata corresponding to the album content in the HDC device to the terminal-side synchronization service.

S807: The terminal-side synchronization service sends the album metadata to the media library.

S808: The media library stores the received album metadata.

S809: The media library sends progress indication information to the terminal-side synchronization service, where the information indicates that downlink synchronization of the album metadata is successfully completed.

After receiving the progress indication information, the terminal-side synchronization service determines and records a synchronization progress of the album metadata based on the progress indication information, to update and store the synchronization progress of the album metadata.

S810: The terminal-side synchronization service sends a full album file obtaining request to the HDC device, where the request is used to request to obtain file metadata corresponding to the album content in the HDC device.

S811: The HDC device sends partial to-be-synchronized file metadata corresponding to the album content in the HDC device to the terminal-side synchronization service.

S812: The terminal-side synchronization service sends the partial to-be-synchronized file metadata to the media library.

S813: The media library stores the received partial file metadata.

S814: The media library sends progress indication information to the terminal-side synchronization service, where the information indicates that downlink synchronization of the partial file metadata is successfully completed.

After receiving the progress indication information, the terminal-side synchronization service determines and records a synchronization progress of the file metadata based on the progress indication information, to update and store the synchronization progress of the album metadata.

Steps S810 to S814 may be performed cyclically until all file metadata corresponding to the album content in the HDC device is transmitted to the terminal device and successfully stored in the terminal device, thereby implementing effect of performing downlink full synchronization in a breakpoint continuous transmission manner.

S815: The terminal-side synchronization service obtains HDC version information from the HDC device, where the information indicates a version of the album content in the HDC device.

This version is the latest version of the album content in the HDC device.

S816: The terminal-side synchronization service determines whether the HDC version information is inconsistent with the media library version information; and if the HDC version information is inconsistent with the media library version information, performs step S817; otherwise, performs step S828.

S817: The terminal-side synchronization service determines to perform downlink synchronization in an incremental synchronization manner. Steps S818 to S827 are performed.

For example, compared with the album content in the terminal device, the album content in the HDC device has some created content. The terminal-side synchronization service may obtain metadata corresponding to the some created album content from the HDC device and store the metadata. Refer to steps S818 to S827. In a case in which album content is modified in the HDC device, the HDC device may send metadata corresponding to the modified album content to the terminal-side synchronization service, and the terminal-side synchronization service may perform corresponding modification. In a case in which album content is deleted from the HDC device, the HDC device may indicate metadata corresponding to the deleted album content to the terminal-side synchronization service, so that the terminal-side synchronization service determines the metadata corresponding to the deleted content in the HDC device, and then deletes the stored metadata.

S818: The terminal-side synchronization service sends an incremental album obtaining request to the HDC device, where the request is used to request to obtain album metadata corresponding to incremental album content in the HDC device.

S819: The HDC device sends the album metadata corresponding to the incremental album content in the HDC device to the terminal-side synchronization service.

S820: The terminal-side synchronization service sends the album metadata to the media library.

S821: The media library stores the received album metadata.

S822: The media library sends progress indication information to the terminal-side synchronization service, where the information indicates that downlink synchronization of the album metadata corresponding to the incremental album content is successfully completed.

S823: The terminal-side synchronization service sends an incremental album file obtaining request to the HDC device, where the request is used to request to obtain file metadata corresponding to the incremental album content in the HDC device.

S824: The HDC device sends partial to-be-synchronized file metadata corresponding to the incremental album content in the HDC device to the terminal-side synchronization service.

S825: The terminal-side synchronization service sends the partial to-be-synchronized file metadata to the media library.

S826: The media library stores the received partial file metadata.

S827: The media library sends progress indication information to the terminal-side synchronization service, where the information indicates that downlink synchronization of the partial file metadata is successfully completed.

The foregoing incremental synchronization process may also be performed in the breakpoint continuous transmission manner. When the breakpoint continuous transmission manner is used, steps S823 to S827 may be performed cyclically until all file metadata corresponding to the album content in the HDC device is transmitted to the terminal device and successfully stored in the terminal device, thereby implementing effect of performing downlink incremental synchronization in the breakpoint continuous transmission manner.

S828: The terminal-side synchronization service determines not to perform downlink synchronization, and ends a current procedure.

Optionally, after ending the current procedure, the terminal-side synchronization service may determine whether an uplink synchronization procedure needs to be performed. If the uplink synchronization procedure needs to be performed, the terminal-side synchronization service may continue to perform a corresponding uplink synchronization process.

Based on the foregoing embodiment, the terminal device may obtain the metadata of the content in the HDC device through downlink synchronization and store the metadata without the help of a home storage app. When an application in the terminal device needs to access the content in the HDC device, the application may obtain the corresponding content in the HDC device based on stored metadata of the content in the HDC device.

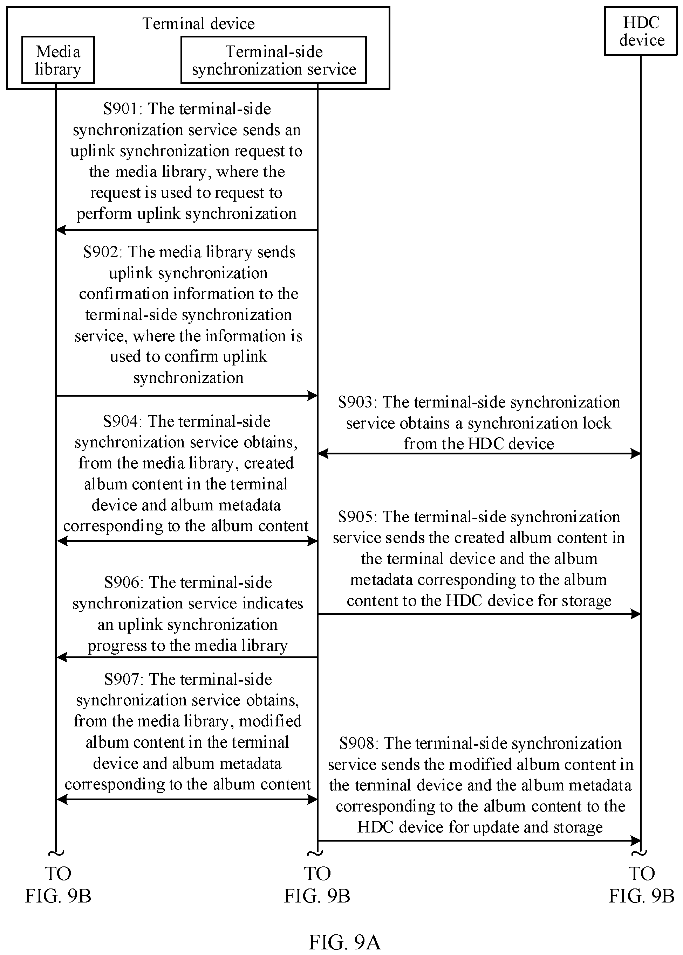

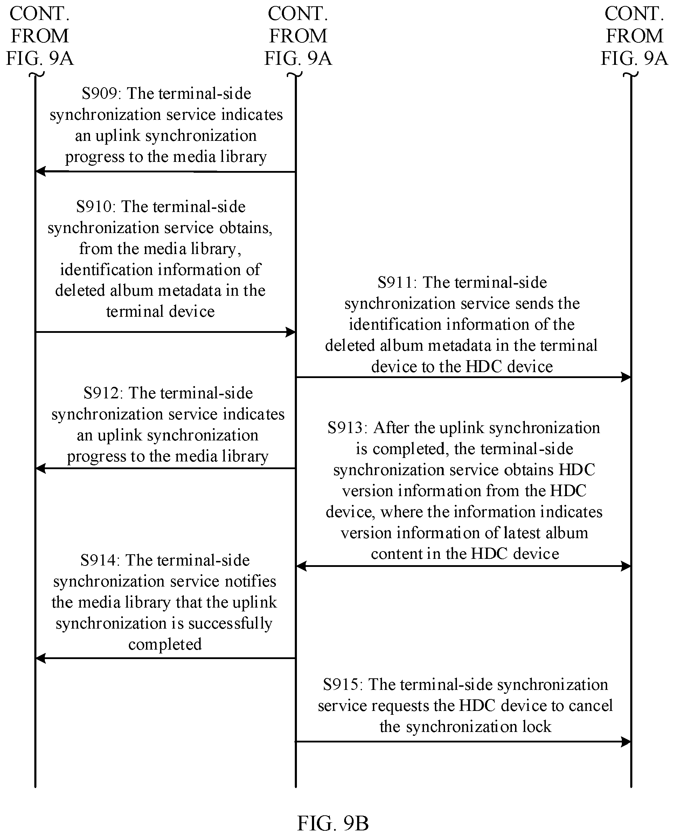

Refer to FIG. 9A and FIG. 9B. An example in which content synchronized between the terminal device and the HDC device is album content is used. A method for an uplink synchronization process may include the following steps.

S901: The terminal-side synchronization service sends an uplink synchronization request to the media library, where the request is used to request to perform uplink synchronization.

S902: The media library sends uplink synchronization confirmation information to the terminal-side synchronization service, where the information is used to confirm uplink synchronization.

S903: The terminal-side synchronization service obtains a synchronization lock from the HDC device.

In this embodiment of this application, the synchronization lock is used to control to implement effect that only one terminal device in a plurality of terminal devices corresponding to a same user account performs uplink and downlink synchronization with the HDC device at a same time. The same user account may be used to log in to a plurality of terminal devices, generate media content on a corresponding terminal device, and synchronize the generated media content to the HDC device and synchronize content from the HDC device by using the corresponding terminal device. Therefore, in this embodiment of this application, each user account has only one synchronization lock. The synchronization lock is allocated by the HDC device, and may be used to control an operation permission on media content corresponding to the user account, for example, whether uplink and downlink synchronization of the media content corresponding to the user account can be performed on the HDC device. At any moment, at most only one terminal device corresponding to the account is allowed to have the synchronization lock. When the terminal device has the synchronization lock corresponding to the user account, the terminal device may perform a synchronization operation on the media content corresponding to the user account. Otherwise, the terminal device is not allowed to perform the synchronization operation on the content corresponding to the user account.

S904: The terminal-side synchronization service obtains, from the media library, created album content in the terminal device and album metadata corresponding to the album content.

The terminal-side synchronization service may send a request to the media library, to request to obtain the created album content in the terminal device and the album metadata corresponding to the album content. After receiving the request, the media library determines whether album content created after a previous uplink synchronization process is performed exists in the stored album content. If the album content created after the previous uplink synchronization process is performed exists in the stored album content, this part of album content and album metadata corresponding to this part of album content are sent to the terminal-side synchronization service. If the album content created after the previous uplink synchronization process is performed does not exist in the stored album content, indication information indicating that no album content is created may be returned to the terminal-side synchronization service, and after receiving the information, the terminal-side synchronization service may continue to obtain, from the media library, modified or deleted album content in the terminal device and metadata corresponding to the album content.

The terminal-side synchronization service may periodically trigger performing of step S801 and subsequent steps, to periodically determine whether uplink synchronization needs to be performed, and when it is determined that the uplink synchronization needs to be performed, a corresponding uplink synchronization process is performed.

S905: The terminal-side synchronization service sends the created album content in the terminal device and the album metadata corresponding to the album content to the HDC device for storage.

Based on this, the album content newly created after the previous uplink synchronization process is performed in the terminal device may be synchronized to the HDC device in an uplink manner.

S906: The terminal-side synchronization service indicates an uplink synchronization progress to the media library.

The terminal-side synchronization service sends the created album content in the terminal device and the album metadata corresponding to the album content to the HDC device. The HDC device stores this part of content, and sends synchronization success notification information to the terminal-side synchronization service after successfully storing the content, to notify that uplink synchronization of this part of content is successfully completed. After receiving the indication information, the terminal-side synchronization service may alternatively send notification information to the media library to notify that the uplink synchronization of the part of content is completed, so that the media library obtains the uplink synchronization progress.

When the terminal-side synchronization service sends the created album content in the terminal device and the album metadata corresponding to the album content to the HDC device, the synchronization may also be completed in a breakpoint continuous transmission manner. In this case, the foregoing processes S904 to S906 may be cyclically performed until the terminal-side synchronization service sends all created album content in the terminal device and the album metadata corresponding to the album content to the HDC device, and successfully stores the album content in the HDC device.

S907: The terminal-side synchronization service obtains, from the media library, modified album content in the terminal device and album metadata corresponding to the album content.

The terminal-side synchronization service may send a request to the media library, to request to obtain the modified album content in the terminal device and the album metadata corresponding to the album content. After receiving the request, the media library determines whether album content modified after a previous uplink synchronization process is performed exists in the stored album content. If the album content modified after the previous uplink synchronization process is performed exists in the stored album content, this part of album content and album metadata corresponding to this part of album content are sent to the terminal-side synchronization service. If the album content modified after the previous uplink synchronization process is performed does not exist in the stored album content, indication information indicating that no album content is modified may be returned to the terminal-side synchronization service, and after receiving the information, the terminal-side synchronization service may continue to obtain, from the media library, deleted album content in the terminal device and metadata corresponding to the album content.

S908: The terminal-side synchronization service sends the modified album content in the terminal device and the album metadata corresponding to the album content to the HDC device for update and storage.

After receiving the modified album content in the terminal device and the corresponding album metadata, the HDC device updates the stored corresponding content by using the modified album content and the corresponding metadata, to modify this part of content in a same way as that in the terminal device. Based on this, the modified album content in the terminal device after the previous uplink synchronization process is performed may be synchronized to the HDC device in an uplink manner.

S909: The terminal-side synchronization service indicates an uplink synchronization progress to the media library.

For details, refer to step S906. Details are not described herein again.

S910: The terminal-side synchronization service obtains, from the media library, identification information of deleted album metadata in the terminal device.

After deleting the album content and the corresponding metadata, the media library may record identification information of the deleted metadata. In an uplink synchronization process, the terminal-side synchronization service may send a request to the media library to request to obtain the identification information of the album metadata corresponding to the deleted album content in the terminal device. After the media library receives the request, if it is determined that the identification information of the deleted metadata exists, the media library sends this part of identification information to the terminal-side synchronization service. If the identification information of the deleted metadata does not exist, indication information indicating that no album content is deleted may be returned to the terminal-side synchronization service, and after receiving the information, the terminal-side synchronization service may continue to obtain, from the media library, deleted album content in the terminal device and metadata corresponding to the album content.

S911: The terminal-side synchronization service sends the identification information of the deleted album metadata in the terminal device to the HDC device.

The terminal-side synchronization service may indicate the HDC device to delete the album metadata and the corresponding media content at a same time. After receiving the identification information, the HDC device determines and deletes corresponding metadata and album content in the stored content. Based on this, the deleted album content in the terminal device after the previous uplink synchronization process is performed may be synchronized to the HDC device in an uplink manner. That is, this part of album content is also deleted in the HDC device.

S912: The terminal-side synchronization service indicates an uplink synchronization progress to the media library.

For details, refer to step S906. Details are not described herein again.

S913: After the uplink synchronization is completed, the terminal-side synchronization service obtains HDC version information from the HDC device, where the information indicates version information of latest album content in the HDC device.

S914: The terminal-side synchronization service notifies the media library that the uplink synchronization is successfully completed.

When notifying the media library that the uplink synchronization is successfully completed, the terminal-side synchronization service may send, to the media library, the version information of the content synchronized from the HDC device, and the media library stores the version information.

S915: The terminal-side synchronization service requests the HDC device to cancel the synchronization lock.

After the current uplink synchronization process is completed, the terminal-side synchronization service may request the HDC device to cancel the synchronization lock. After the synchronization lock is canceled, the terminal-side synchronization service cannot perform the uplink synchronization process with the HDC device. If the terminal-side synchronization service needs to perform the uplink synchronization with the HDC device again, the terminal-side synchronization service needs to request the synchronization lock from the HDC device again.

Based on the foregoing embodiment, the terminal device may synchronize the local content to the HDC device for storage without the help of a home storage app.

### 2. Content access

Based on the method for synchronizing content provided in the foregoing embodiment, a terminal device may synchronize metadata of content in an HDC device to a media library of the terminal device for storage, so that an application installed in the terminal device can access the content in the HDC device based on the metadata.

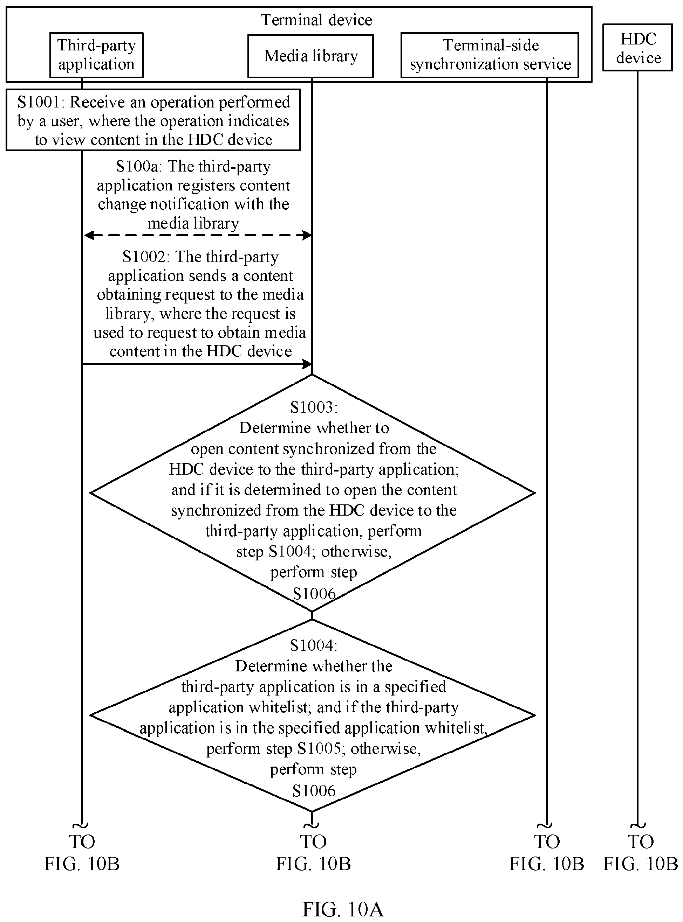

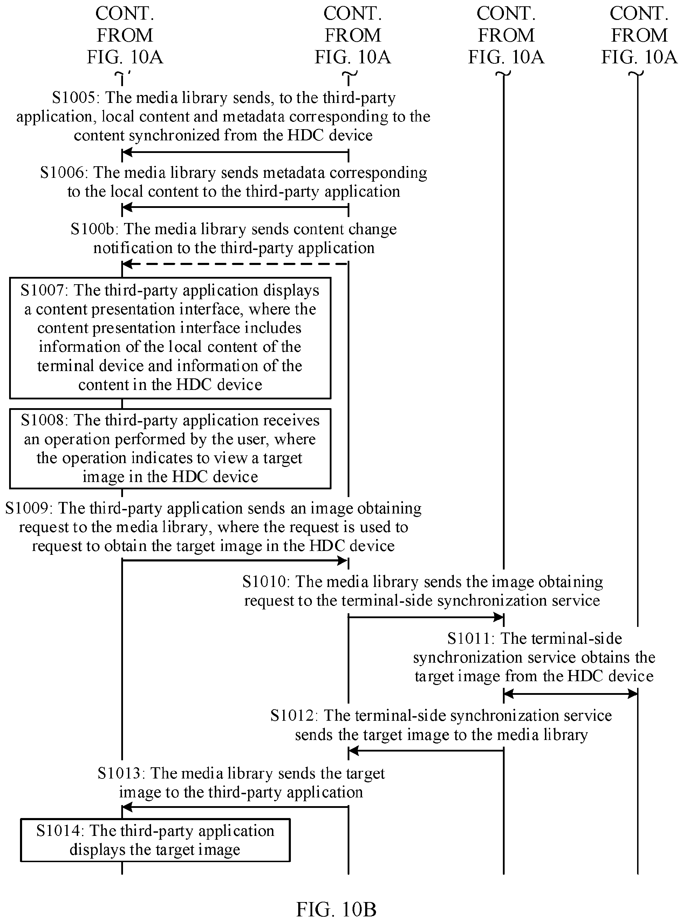

Refer to FIG. 10A and FIG. 10B. A scenario in which a third-party application installed in the terminal device accesses content in the HDC device is used as an example. The content access method provided in this embodiment of this application may include the following steps.

S1001: The third-party application in the terminal device receives an operation performed by a user, where the operation indicates to view content in the HDC device.

In some embodiments of this application, the third-party application may provide a control for controlling selection of a source (or range) of access content. The user may perform an operation on the control, and select the source of the access content as local content, or the content in the HDC device, or local content and the content in the HDC device. After the user selects the source of the access content, the third-party application may request corresponding content from the media library and present the content, so that the user can further select specific content to be viewed from the media library.

For example, when the source of the access content selected by the user is the local content and the content in the HDC device, step S1002 and subsequent steps may be performed.

S1002: The third-party application sends a content obtaining request to the media library, where the request is used to request to obtain media content in the HDC device.

The third-party application may interact with the media library through an access interface provided by the media library.

S1003: The media library determines whether to open content synchronized from the HDC device to the third-party application; and if the media library determines to open the content synchronized from the HDC device to the third-party application, performs step S1004; otherwise, performs step S1006.

The media library may pre-obtain an application whitelist set by the user, where the application whitelist includes identification information of at least one third-party application allowed to access the content in the HDC device. When the third-party application requests the content in the HDC device from the media library, the media library may obtain identification information of the third-party application, and determine whether the identification information is included in the application whitelist. If the identification information is included in the application whitelist, it may be determined that the third-party application has permission to access the content in the HDC device, and the content synchronized from the HDC device may be provided for the third-party application. Otherwise, it may be determined that the third-party application does not have the permission to access the content in the HDC device, and the content synchronized from the HDC device cannot be provided for the third-party application.

S1004: The media library determines whether the third-party application is in a specified application whitelist; and if the third-party application is in the specified application whitelist, performs step S1005; otherwise, performs step S1006.

S1005: The media library sends, to the third-party application, the local content and metadata corresponding to the content synchronized from the HDC device.

S1006: The media library sends metadata corresponding to the local content to the third-party application.

S1007: The third-party application displays a content presentation interface, where the content presentation interface includes information of the local content of the terminal device and information of the content in the HDC device.

The information may be identification information or the like. For example, when the content requested by the third-party application from the media library is an image, the content presentation interface may include identification information (such as a thumbnail) of the image locally stored in the terminal device and identification information of the image in the HDC device. The identification information of the image in the HDC device is determined by the media library based on metadata corresponding to the content in the HDC device, and the metadata may be obtained by the terminal device by performing downlink synchronization with the HDC device according to the method provided in the foregoing embodiment.

S1008: The third-party application receives an operation performed by the user, where the operation indicates to view a target image in the HDC device.

For example, the operation performed by the user may be that the user taps identification information of the target image in the HDC device presented on the content presentation interface, indicating that the user needs to view the target image.

S1009: The third-party application sends an image obtaining request to the media library, where the request is used to request to obtain the target image in the HDC device.

S1010: The media library sends the image obtaining request to a terminal-side synchronization service.

S1011: The terminal-side synchronization service obtains the target image from the HDC device.

S1012: The terminal-side synchronization service sends the target image to the media library.

S1013: The media library sends the target image to the third-party application.

S1014: The third-party application displays the target image.

By registering content change notification with the media library, the third-party application may request the media library to notify the third-party application after determining that the local content in the terminal device or the content synchronized by the terminal device from the HDC is changed, so that the third-party application performs a corresponding update. As an optional implementation, after the third-party application successfully registers the content change notification with the media library, the media library may notify the third-party application of latest local content and the metadata of the content synchronized from the HDC device after each uplink and downlink synchronization process ends.

Optionally, in the foregoing procedure, before step S1002, the method may further include step S100a.

S100a: The third-party application registers the content change notification with the media library.

After step S1005 or step S1006, the method may further include step S100b.

S100b: The media library sends content change notification to the third-party application.

Based on the foregoing method, the third-party application in the terminal device can also obtain information of the content in the HDC device without using a home storage app, and perform fusion presentation based on information of the local content in the terminal device, so that the local content in the terminal device or the content obtained from the HDC device can be presented to the user based on a user operation. Compared with a complex operation procedure in which the user switches from the third-party application to the home storage app to perform an operation, the method enables the user to directly perform, on the third-party application, fusion access to the local content in the terminal device and the content in the HDC device, thereby improving simplicity and convenience of viewing the content by the user.

With reference to specific instances, the following describes a content management method provided in embodiments of this application by using examples.

In this instance, an example in which content to be accessed and processed in the solutions of this application is an image and a video is used for description.

An HDC device can store, back up, and synchronize a file such as a picture, a video, and a document. A home storage app is a matching application of the HDC device and can be installed in a terminal device. A user can use the home storage app on the terminal device to initialize the HDC device, bind a user account, connect to a network, and the like. The HDC device can isolate content uploaded and downloaded by different users based on user accounts.

In this instance, a gallery application may be installed in the terminal device, and the gallery application may be used as a fusion carrier of content in the terminal device and the HDC device. The user may browse and manage, in the gallery application, media content (a picture and a video) stored in the HDC device. The gallery application may fuse and present the media content in the HDC device and local media content of the terminal device or even media content in the cloud and media content in a distributed storage device, so that repeated content is not presented. In this way, the user can view stored multi-terminal media content in one application, that is, the gallery application.

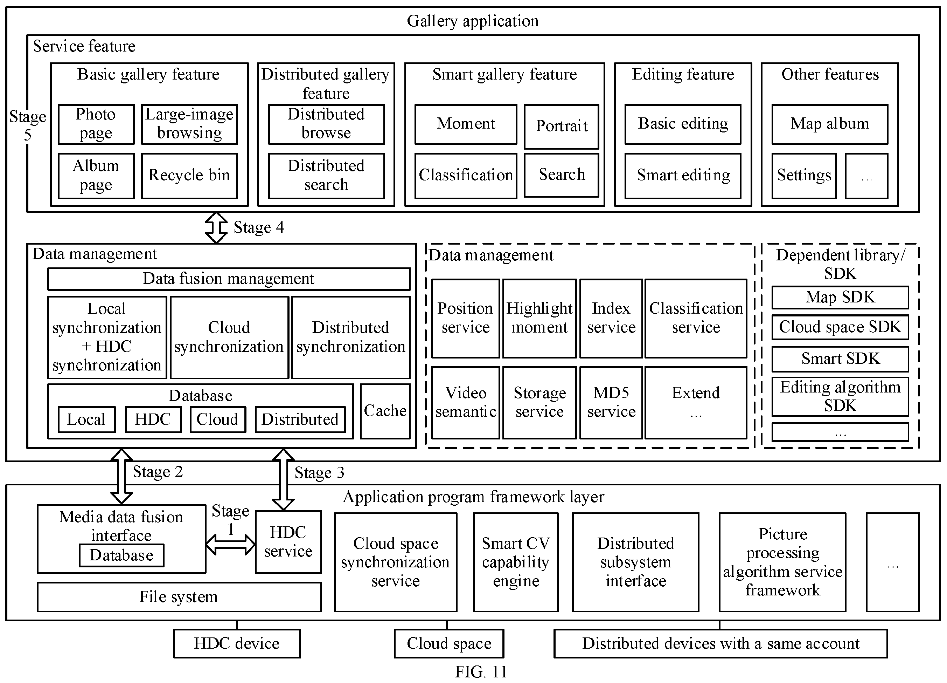

Specifically, refer to FIG. 11. In a content processing solution implemented based on the gallery application, the solution mainly includes the following five stages.

### Stage 1: uplink and downlink synchronization

In this stage, a media library deployed at an application framework layer of the terminal device may invoke an HDC service through integration, and collaborate with the HDC service to complete uplink and downlink synchronization of media content between the terminal device and the HDC device. For details, refer to descriptions of the uplink and downlink synchronization process in this embodiment of this application.

### Stage 2: media library fusion management

In this stage, the media library provides a synchronization interface for the gallery application, so that the gallery application can interconnect with the HDC service by using the media library. In this way, the media content in the HDC device is synchronized to a database of the gallery application by using the HDC service, and the gallery application can complete fusion of the local media content and the media content in the HDC device.

Optionally, the media library may further include a cloud space synchronization service. Based on the cloud space synchronization service, the media library may synchronize media content in cloud storage space. Based on the synchronization interface of the media library, the gallery application may further obtain and fuse the media content stored in the cloud storage space. Optionally, the media library may further include a distributed subsystem interface. Based on the interface, the media library may interact with the distributed storage device, to synchronize media content with the distributed storage device (corresponding to a same user account). Based on the synchronization interface of the media library, the gallery application may further obtain and fuse the media content stored in the distributed storage device.

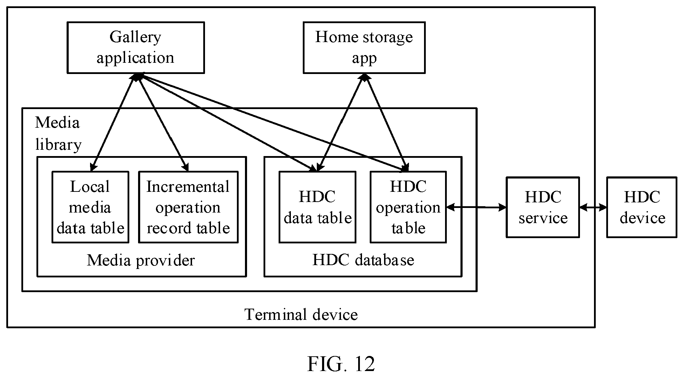

For example, as shown in FIG. 12, the media library may include a local database and an HDC database. The local database includes a local media data table and an incremental operation table, and the local media data table is used to record metadata of the media content locally stored in the terminal device. The incremental operation record table is used to record an operation performed on the locally stored media content in a time period between two synchronization processes. Based on the incremental operation record table, a change of the local media content in the time period between the two synchronization processes may be determined, thereby determining content to be synchronized in an uplink incremental synchronization process. One synchronization process includes one uplink synchronization process and/or one downlink synchronization process. The HDC database is used to manage media content synchronized by the terminal device from the HDC device. The HDC database includes an HDC data table and an HDC operation table. The HDC data table is used to record metadata of media content synchronized by the terminal device from the HDC device. The HDC operation table is used to record an operation performed on the media content in the HDC device in a time period between two synchronization processes. The HDC operation table may be used for the HDC service to perform downlink incremental synchronization. In addition, the HDC operation table may be used for the gallery application and the like to determine a change of the media content in the HDC device, so that presented content may be updated. Content recorded by the HDC data table and the HDC operation table is obtained by the HDC service from the HDC device. Optionally, the home storage app may alternatively obtain the media content in the HDC device by using the HDC database in the media library.

As shown in FIG. 12, for media content, the gallery application may synchronize local data from a local database of the media library to the gallery, and may synchronize data from an HDC database of the media library to the gallery application, thereby completing fusion of local media content and HDC media content in the gallery application. To obtain the HDC media content, the gallery application does not directly interact with the HDC service, but only interacts with the HDC database of the media library.

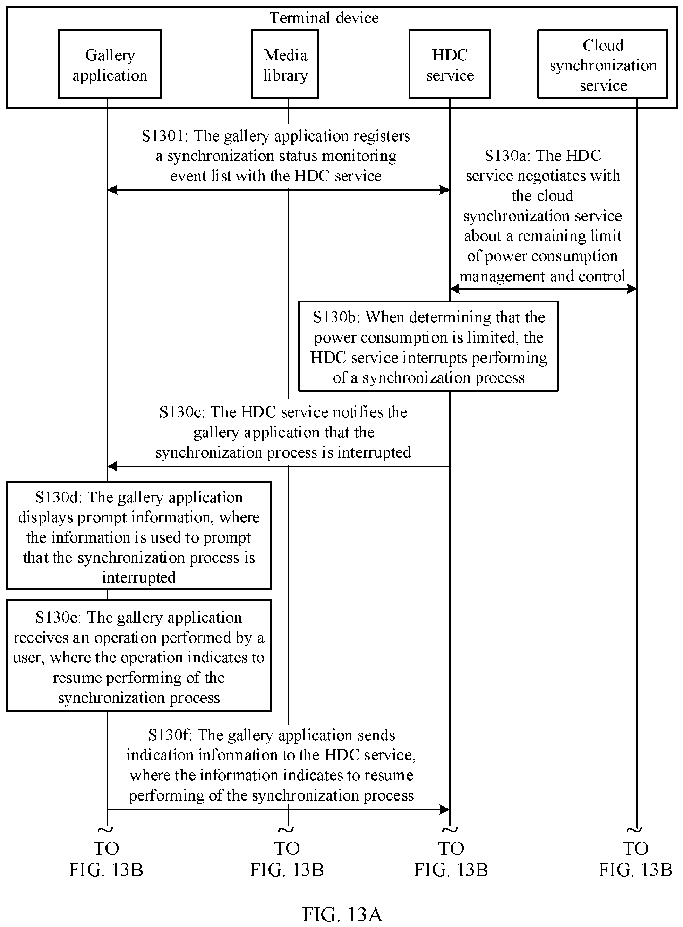

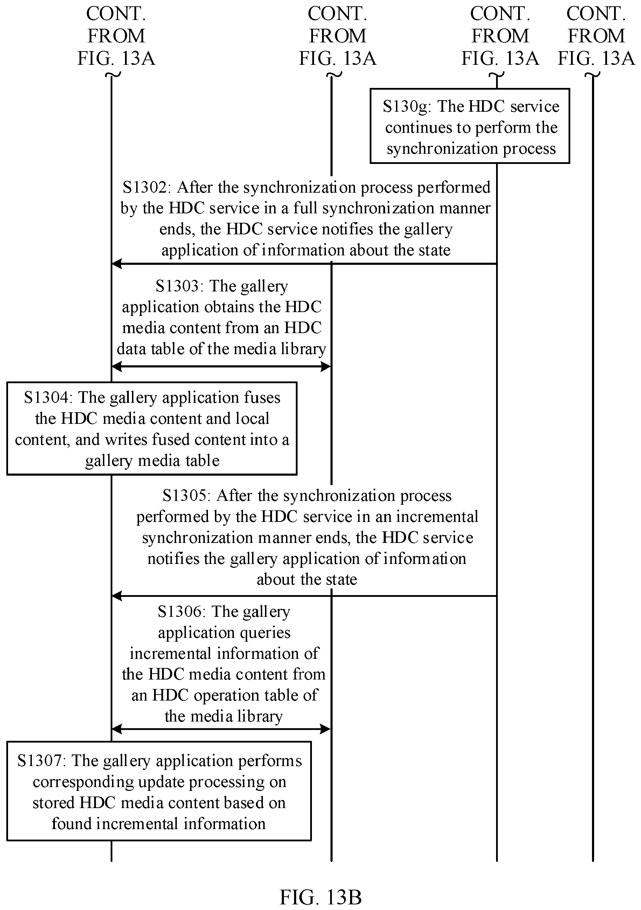

Specifically, refer to FIG. 13A and FIG. 13B. A related procedure may include the following steps.

S1301: The gallery application registers a synchronization status monitoring event list with the HDC service.

Specifically, the gallery application may register the synchronization status monitoring event list with an application-side synchronization service, and then the application-side synchronization service registers the synchronization status monitoring event list with a terminal-side synchronization service. After successful registration, the terminal-side synchronization may notify a synchronization status to the application-side synchronization service when a state of the uplink and downlink synchronization process changes. The application-side service then notifies the gallery application of the synchronization status, so that the gallery application can learn a progress of the uplink and downlink synchronization process.

S1302: After the synchronization process performed by the HDC service in a full synchronization manner ends, the HDC service notifies the gallery application of information about the state.

S1303: The gallery application obtains the HDC media content from an HDC data table of the media library.

S1304: The gallery application fuses the HDC media content and local content, and writes fused content into a gallery media table.

Steps S1301 to S1304 may be performed in a process of performing first synchronization between the terminal device and the HDC device. A synchronization manner used in this process is a full synchronization manner. In this case, after a full synchronization process is performed, the gallery application obtains full synchronized HDC media content, and fuses the full synchronized HDC media content with the local media content. In a subsequent synchronization process, an incremental synchronization manner may be used when synchronization is performed between the terminal device and the HDC device. In this case, after an incremental synchronization process is performed, the gallery application may obtain incremental synchronized HDC media content, and update existing content.

Optionally, after steps S1031 to S1303, the following steps may be further included:

S1305: After the synchronization process performed by the HDC service in an incremental synchronization manner ends, the HDC service notifies the gallery application of information about the state.

S1306: The gallery application queries incremental information of the HDC media content from an HDC operation table of the media library.

S1307: The gallery application performs corresponding update processing on stored HDC media content based on found incremental information.

If the incremental information is creating some HDC content, the gallery application fuses the created HDC media content and the local content, and then writes the fused HDC media content to the gallery media table. If the incremental information is modifying some HDC content, the gallery application correspondingly modifies and updates information recorded in the gallery media table based on the incremental information. If the incremental information is deleting some HDC content, the gallery application deletes a record corresponding to the part of HDC content from the gallery media table.

In some embodiments of this application, when the terminal device performs the foregoing procedure, if a breakpoint continuous transmission manner is used in the synchronization process, the synchronization process may be interrupted for some reasons. When the synchronization process is interrupted, the HDC service notifies the gallery application of a terminal status. The gallery application may display interruption prompt information, to prompt the user that the synchronization process is interrupted. In addition, the gallery application may provide a controlling tool for triggering a start of the synchronization process. In this way, after determining, based on the interruption prompt information, that the synchronization process is interrupted, the user may manually control, by operating the controlling tool, to continue the synchronization. After receiving a user operation, the gallery application indicates the HDC service to resume performing of the synchronization process.

Optionally, when performing the foregoing procedure, the terminal device may further simultaneously perform a cloud-based media content synchronization process. For example, the terminal device may include a cloud synchronization service to complete media content synchronization with the cloud. However, running of the cloud synchronization service increases power consumption of the terminal device, and even affects normal running of the HDC service, causing interruption of the synchronization process between the terminal device and the HDC device. In this scenario, between step S1301 and step S1302, the following steps may be further included:
S130a: The HDC service negotiates with the cloud synchronization service about a remaining limit of power consumption management and control.
S130b: When determining that the power consumption is limited, the HDC service interrupts performing of the synchronization process.
S130c: The HDC service notifies the gallery application that the synchronization process is interrupted.
S130d: The gallery application displays prompt information, where the information is used to prompt that the synchronization process is interrupted.
S130e: The gallery application receives an operation performed by the user, where the operation indicates to resume performing of the synchronization process.
S130f: The gallery application sends indication information to the HDC service, where the information indicates to resume performing of the synchronization process.
S130g: The HDC service continues to perform the synchronization process.

Based on the foregoing processes, the user can control a performing progress of the synchronization process, thereby improving user experience.

### Stage 3: synchronization status notification

In this stage, the HDC service provides a synchronization status interface for the gallery application. Based on the interface, the HDC service can notify the gallery application of a progress of uplink and downlink synchronization with the HDC device. The gallery application can display synchronization status information, so that the user can perceive a synchronization progress.

### Stage 4: gallery fusion management

In this stage, a data management service in the gallery application can perform fusion management on the local media content, content synchronized from the HDC device, and content synchronized from the cloud and a distributed device.

For example, the gallery application may write, to the media library by using the synchronization interface provided by the media library, an operation (including an offline operation) performed by the user on the HDC media content in the gallery application, and the media library performs corresponding recording by using the HDC operation table, and may synchronize the operation to the HDC device in a next synchronization process.

### Stage 5: fusion display

Based on the stage 5, the gallery application may perform fusion display on the local media content, the content synchronized from the HDC device, the content synchronized from the cloud and the distributed device, perform subsequent processing, and the like. For example, the gallery application may perform fusion display on the local media content and the HDC media content, including fusion display of an album display interface, fusion display of an image display interface, album filtering display, uplink status icon display, downlink synchronization progress status display, and the like. The gallery application may further set a synchronization album range, including whether to present an HDC synchronization setting entry and an album setting list that is independent of a cloud synchronization album range. The gallery application may further delete logical adaptation, delete logical adaptation under different pages and different filtering conditions of albums, and the like. The gallery application may further adapt to a data source of a smart gallery, so that the data source that can be analyzed and displayed by the smart gallery includes the HDC media content.

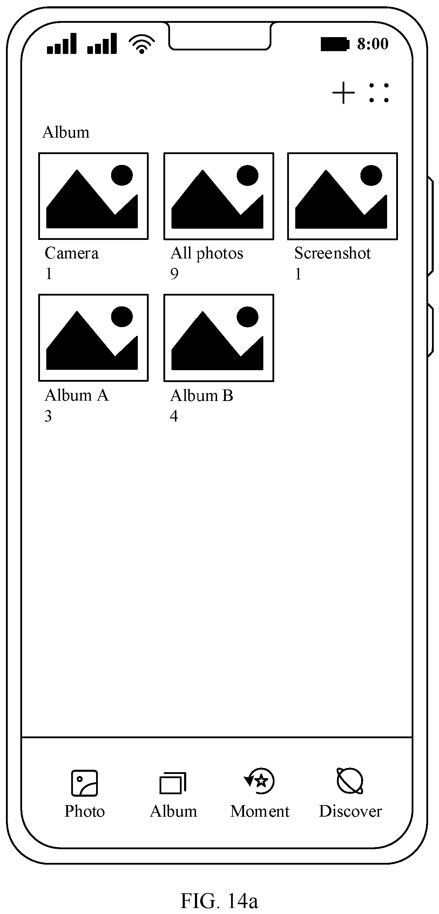

In a possible example, when the user opens the gallery application, the terminal device may display an interface shown in FIG. 14a, and the interface may include at least one album icon. Each album includes at least one local image and/or at least one HDC image. When the user taps an icon of one of the albums, the terminal device may display a thumbnail of an image included in the album. When the user taps a thumbnail, the terminal device may enlarge an original image corresponding to the thumbnail for display. The local image is an image locally stored in the terminal device, and the HDC image is an image stored in the HDC device. The terminal device may obtain an HDC album and a thumbnail of the HDC image based on metadata obtained from the HDC device during the synchronization process.

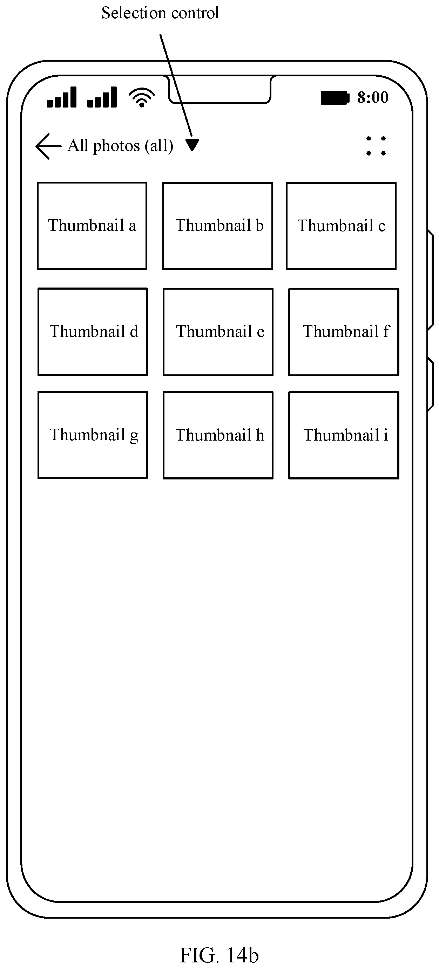

For example, when the user taps an album "All photos" shown in FIG. 14a, the terminal device may display an image display interface shown in FIG. 14b. The interface may include thumbnails of the local image and the HDC image in all other albums. The terminal device may sort the thumbnails of the local image and the HDC image as a whole in a sorting manner (for example, a sorting manner based on a creation time, a file name, or a file size) selected by the user, and then perform fusion display. For example, in the interface shown in FIG. 14b, thumbnails a to c, a thumbnail e, and thumbnails g to i may be thumbnails of local images, and thumbnails d and f may be thumbnails of HDC images. Optionally, the interface may further perform fusion display on a thumbnail of image synchronized by the terminal device from another storage device, for example, a thumbnail of a cloud image.

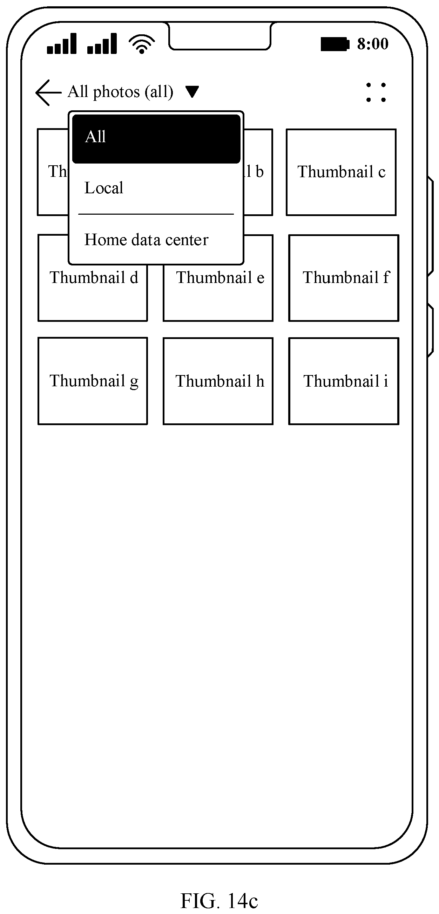

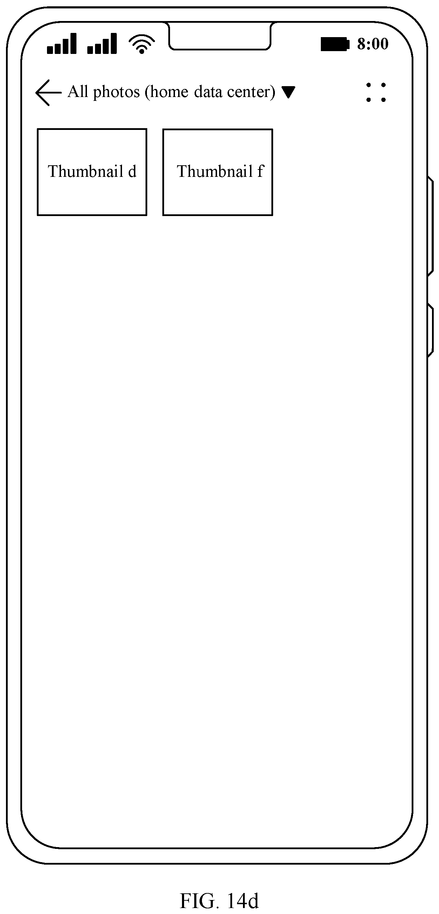

Further, the terminal device may additionally display, on the image display interface, a control used to display an image for screening, so that the user can choose to view an image obtained after filtering or screening is performed on the local image and the HDC image. For example, the image display interface shown in FIG. 14b may include a screening control. The user may perform an operation on the screening control, to trigger a process in which the terminal device performs screening on displayed thumbnails and then displays the thumbnails. When the user taps the screening control shown in FIG. 14b, the terminal device may display an interface shown in FIG. 14c. The interface includes controls used to select different types of images, for example, a control used to select a local image (a "local" control shown in FIG. 14c) or a control used to select an HDC image (a "home data center" control shown in FIG. 14c). After the user taps the "home data center" control, the terminal device may display an interface shown in FIG. 14d, where the interface includes only thumbnails of HDC images.

Certainly, in another optional implementation, the terminal device may directly display thumbnails of the local image and the HDC image in different areas on the interface shown in FIG. 14b, so that the user directly and clearly distinguishes between image sources.

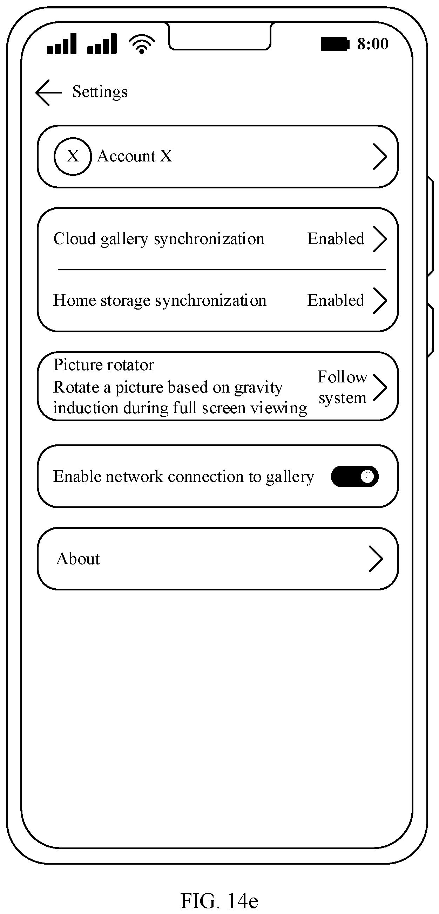

In a possible example, the terminal device may additionally display, on a setting interface of the gallery, a switch used to control HDC synchronization, for example, a "home storage synchronization" control shown in FIG. 14e. When the user turns on the switch for the HDC synchronization, the terminal device may periodically perform a synchronization process of media content such as a picture and a video with the HDC device, and perform fusion display on information about an image and a video synchronized from the HDC device and information about an image and a video in the gallery application.

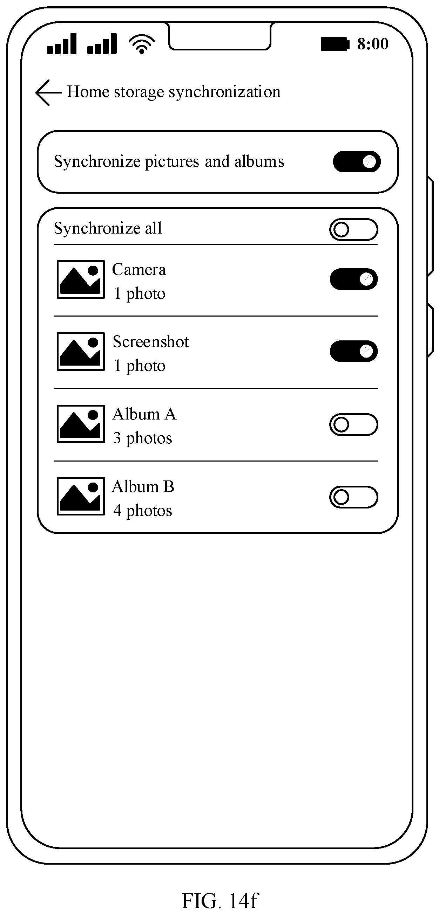

Further, the terminal device may further provide a selection control for selecting an album synchronization range. For example, after the user taps the "home storage synchronization" control shown in FIG. 14e, the terminal device may display an interface shown in FIG. 14f. The interface includes selection controls corresponding to different albums, and the user may select albums for which content synchronization with the HDC device is performed. For example, if only a "camera" album is selected, when the terminal device performs synchronization with the HDC device, in an uplink synchronization process, only an image in the "camera" album is synchronized to the HDC device in an uplink manner. After the uplink synchronization, the HDC device also stores the "camera" album and the image in the "camera" album. In a downlink synchronization process, the terminal device also synchronizes only the image in the "camera" album in the HDC device to the local in a downlink manner.

Optionally, in a state in which the switch for the HDC synchronization is on, the terminal device may further simultaneously display information indicating a synchronization progress. When the synchronization progress is synchronizing, the terminal device may temporarily prohibit the user from accessing and operating content in an HDC album. When the user attempts to access and operate the content in the HDC album, the terminal device prompts the user that a synchronization process is currently in progress, and the user cannot perform a corresponding operation, and the like. When the synchronization progress is synchronized, the terminal device may allow and respond to access and an operation of the user on the content in the HDC album.

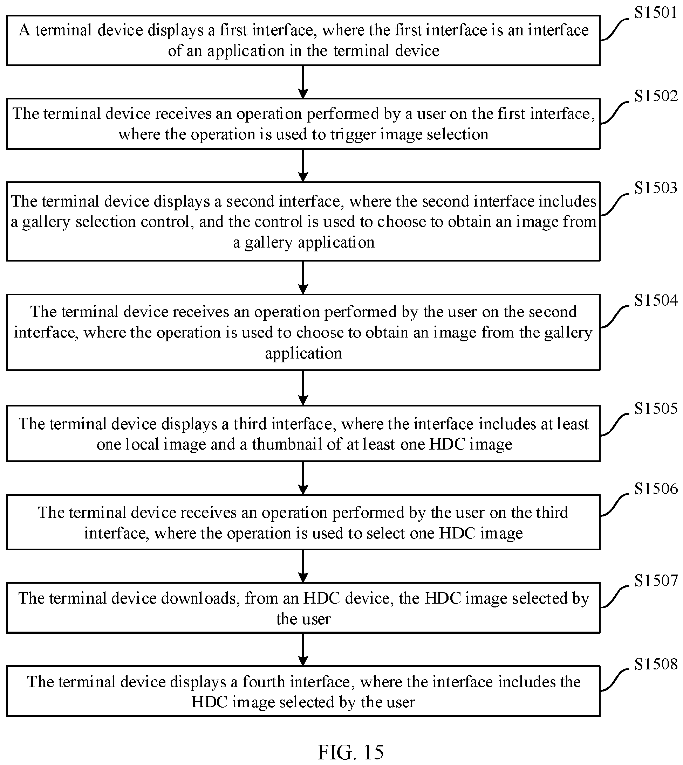

Refer to FIG. 15. Based on the foregoing instances, procedures of a content using method provided in an embodiment of this application may include the following steps.

S1501: A terminal device displays a first interface, where the first interface is an interface of an application in the terminal device.

The application in the terminal device may be a system application or a third-party application.

S1502: The terminal device receives an operation performed by a user on the first interface, where the operation is used to trigger image selection.

The operation is an operation performed by the user on the system application or the third-party application of the terminal device. Based on the operation, the user may trigger a process of obtaining and viewing, in the system application or the third-party application, an image in a gallery application.

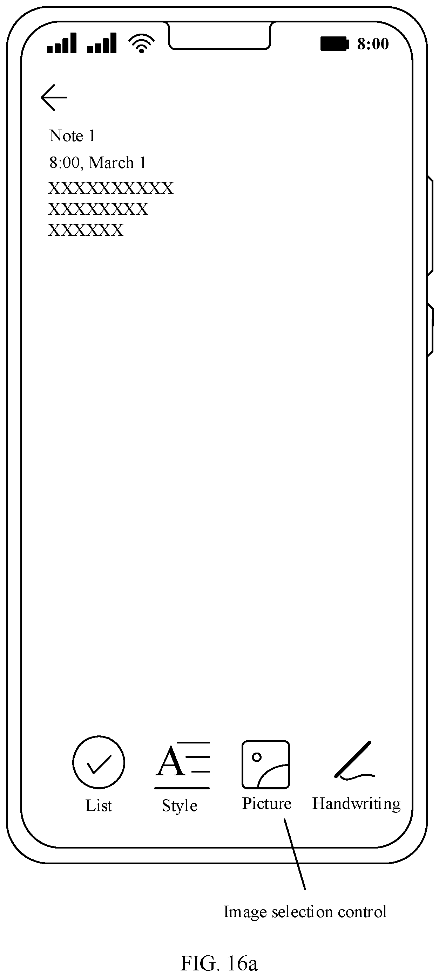

For example, FIG. 16a is a schematic diagram of a first interface. As shown in FIG. 16a, the first interface may be a display interface of a memo application. The interface includes an image selection control, and the control is used to trigger image selection, to add an image to the memo note. In this case, the operation performed by the user on the first interface may be an operation of tapping the image selection control in the first interface by the user.

S1503: The terminal device displays a second interface, where the second interface includes a gallery selection control, and the control is used to choose to obtain an image from the gallery application.

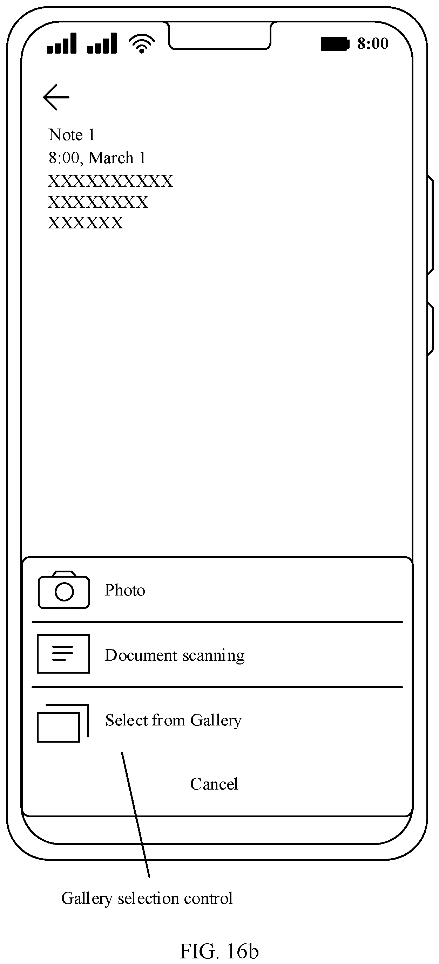

For example, FIG. 16b is a schematic diagram of a second interface. After the user taps a picture selection control shown in FIG. 16a, the terminal device may display a second interface shown in FIG. 16b. The interface includes at least a gallery selection control, and may further include another selection control. The another selection control is used to select another manner of obtaining an image.

S1504: The terminal device receives an operation performed by the user on the second interface, where the operation is used to choose to obtain an image from the gallery application.

For example, the operation may be an operation of tapping, by the user, the gallery selection control shown in FIG. 16b.

The terminal device may perform steps S1501 to S1503 by using the installed system application or the third-party application.

S1505: The terminal device displays a third interface, where the interface includes at least one local image and a thumbnail of at least one HDC image.

The local image is an image locally stored in the terminal device, and the HDC image is an image stored in the HDC device. The thumbnail is used as identification information of an image, so that the user can select an image. The thumbnail of the at least one HDC image may be obtained from the HDC device after the terminal device performs synchronization with the HDC device based on a synchronization manner in the foregoing embodiment.

Optionally, the third interface further includes a source identifier corresponding to each image, and the source identifier indicates that a source of the image is the terminal device or the HDC device.

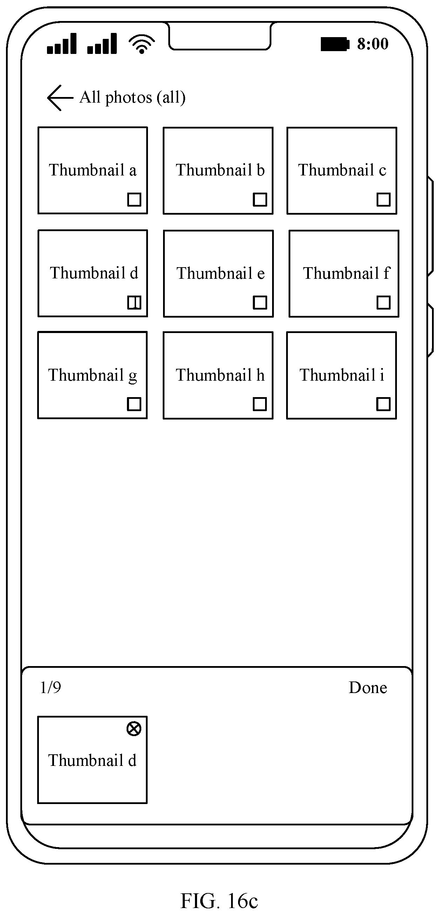

For example, after the user taps the gallery selection control shown in FIG. 16b, the terminal device may display a third interface shown in FIG. 16c, where the third interface includes local images and thumbnails of HDC images. Thumbnails a to c, a thumbnail e, and thumbnails g to i are thumbnails of the local images, and thumbnails d and f are thumbnails of the HDC images.

In some embodiments of this application, the system application or the third-party application in the terminal device may invoke an image selector (Picter) component of the gallery application through a pick action. When the image selector component is invoked, the gallery application presents local content and HDC content in the image selector in a fusion manner, so that the user can select both a locally stored image and an image stored in the HDC device, thereby facilitating the user to select an image conveniently and quickly.

S1506: The terminal device receives an operation performed by the user on the third interface, where the operation is used to select one HDC image.

The operation is an operation of selecting, by the user, a thumbnail of one HDC image in the third interface.

For example, the operation may be an operation of selecting, by the user, a thumbnail of one HDC image in the interface shown in FIG. 16c and tapping "Done".

S1507: The terminal device downloads, from the HDC device, the HDC image selected by the user.

Specifically, the gallery application in the terminal device may determine corresponding metadata based on thumbnail information of the HDC image selected by the user, obtain a download API of the HDC image based on the corresponding metadata, and drive, by invoking the download API, an HDC service to download the HDC image from the HDC device.

After downloading the HDC image from the HDC device, the terminal device may store the downloaded HDC image locally, and may provide a local uniform resource identifier (uniform resource identifier, URI) of the HDC image for the system application or the third-party application. In a subsequent process, the system application or the third-party application may further continue to access the HDC image based on the URI, or perform another operation on the HDC image.

Optionally, before downloading the HDC image selected by the user from the HDC device, the terminal device may alternatively prompt the user to determine whether to download the HDC image. If determining, based on information fed back by the user, to download the HDC image, the terminal device performs an operation of downloading the image from the HDC device.

S1508: The terminal device displays a fourth interface, where the interface includes the HDC image selected by the user.

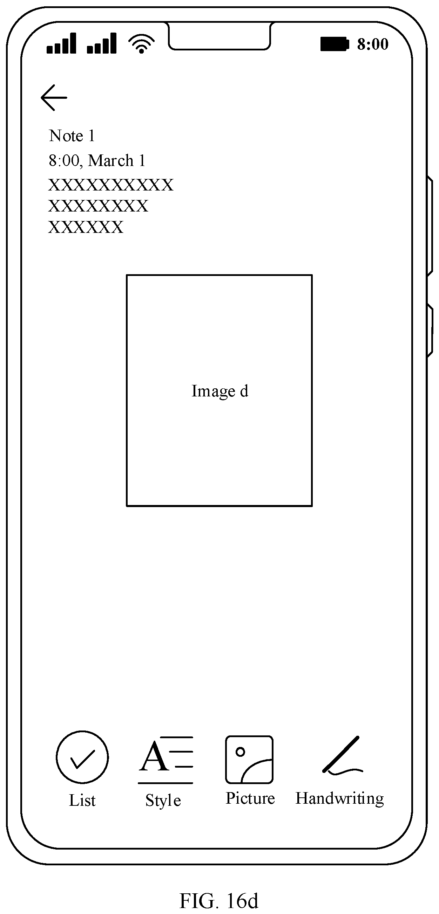

For example, after the user selects the thumbnail (a thumbnail d) of the HDC image in the interface shown in FIG. 16c and taps "Done", the terminal device may display a fourth interface shown in FIG. 16d. Compared with the first interface shown in FIG. 16a, the interface adds an image (an image d corresponding to the thumbnail d) selected by the user, thereby implementing effect of adding the image in the HDC device to the memo. For the user, the user only needs to perform an operation on the memo application to implement the foregoing effect. An operation in an entire process is very simple, and therefore user experience can be significantly improved.

It should be noted that specific implementation procedures provided in the foregoing instances are merely examples of the method procedures applicable to embodiments of this application. A performing sequence of the steps may be correspondingly adjusted based on an actual requirement, or another step may be added, or some steps may be reduced. The method procedures provided in the foregoing instances may also be performed based on method procedures provided in other instances, to implement the solutions provided in embodiments of this application.

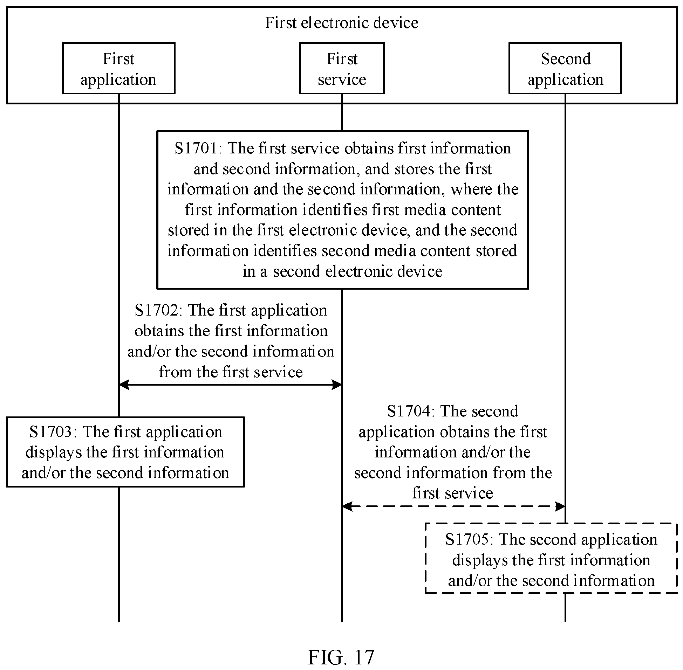

Based on the foregoing embodiments and a same concept, this application further provides a content management method, applied to a first electronic device. The first electronic device includes a first service and a first application. As shown in FIG. 17, the method includes the following steps.

S1701: The first service obtains first information and second information, and stores the first information and the second information, where the first information identifies first media content stored in the first electronic device, and the second information identifies second media content stored in a second electronic device.

For example, the first electronic device may be the terminal device in the foregoing embodiment, and the second electronic device may be the HDC device in the foregoing embodiment.

In some embodiments of this application, the first application is any application installed in the first electronic device. The first service is located at an application framework layer in an operating system of the first electronic device. For example, the first service may include the media library and the HDC service in the foregoing embodiment, and the first application may be the system application or the third-party application in the foregoing embodiment.

In some embodiments of this application, the first application may obtain the first information and/or the second information from the first service by using a first interface provided by the first service. For example, the first interface may be the access interface provided by the media library shown in FIG. 5 in the foregoing embodiment.

In some embodiments of this application, the first media content and the second media content may be images or videos, and the first information and the second information may be the thumbnails in the foregoing embodiments.

In some embodiments of this application, first metadata corresponding to the first media content includes the first information, and second metadata corresponding to the second media content includes the second information. The first service may obtain the first metadata and store the first metadata, and obtain the second metadata and store the second metadata, to implement effect of obtaining the first information and the second information and storing the first information and the second information.

The first metadata and the first media content are content locally stored in the first electronic device, and the first service may directly obtain the content locally. For the second metadata and the second media content, the first service may obtain the content by performing downlink synchronization with the second electronic device.

In the solution provided in this embodiment of this application, the first service may periodically perform a synchronization process with the second electronic device, or the first service may perform a synchronization process with the second electronic device when stored media content and/or metadata change/changes. The synchronization process includes a downlink synchronization process and/or an uplink synchronization process. When the synchronization process includes the downlink synchronization process and the uplink synchronization process, the downlink synchronization process may be performed before the uplink synchronization process, or the uplink synchronization process may be performed before the downlink synchronization process. A case in which the media content stored in the first electronic device changes may be that the first electronic device creates storage media content, or the media content stored in the first electronic device is modified or deleted, or metadata that is stored in the first electronic device and that is synchronized from the second electronic device is deleted.

The first service may trigger the downlink synchronization and/or the uplink synchronization when determining that a start time of the period arrives, or the first service may trigger the downlink synchronization and/or the uplink synchronization when determining that the stored media content and/or the stored metadata that is from the second electronic device change/changes. After triggering the downlink synchronization, the first service may send synchronization indication information to the second electronic device. The synchronization indication information indicates the second electronic device to send downlink synchronization information to the first service, and the downlink synchronization information may indicate at least one of the following: sending metadata corresponding to the created media content in the second electronic device to the first service; sending modified metadata or metadata corresponding to the modified media content in the second electronic device to the first service; and indicating, to the first service, metadata corresponding to the deleted media content in the second electronic device. After the second electronic device sends corresponding information to the first service based on the indication, the first service may determine, based on the information, a change that occurs in the media content and the metadata in the second electronic device, to correspondingly update the metadata stored in the first service.

In a possible case, the second media content may be created media content in the second electronic device after a previous downlink synchronization process. In this case, when determining to perform the downlink synchronization process, the first service may first indicate the second electronic device to send downlink synchronization information to the first service. After receiving the indication, the second electronic device determines that the second media content is media content created after the previous downlink synchronization process. In this case, the second electronic device may send downlink synchronization information including the second metadata and the first indication information to the first service. The first indication information indicates that the second metadata is metadata corresponding to the created media content in the second electronic device. In this case, the first service may determine, based on the received first indication information, that only the second metadata needs to be stored, and the first service stores the second metadata.

In another possible case, the second media content may be media content obtained after the second electronic device modifies the third media content after a previous synchronization process. Because the third media content is media content stored by the second electronic device before the previous synchronization process, in a previous downlink synchronization process, the first service may obtain third metadata corresponding to the third media content from the second electronic device and store the third metadata. After the second electronic device modifies the third media content to obtain the second media content, the third metadata is correspondingly updated to the second metadata. Therefore, when determining to perform the current downlink synchronization process, the first service needs to obtain the second metadata from the second electronic device to update the previously stored third metadata. In this case, the first service may indicate the second electronic device to send downlink synchronization information to the first service. After receiving the indication, the second electronic device determines that the second media content is modified third media content. In this case, the second electronic device may send the downlink synchronization information including the second metadata and the second indication information to the first service. The second indication information indicates that the second metadata is metadata obtained after the third metadata is modified. In this case, the first service may determine, based on the second indication information, to update the stored third metadata by using the second metadata, and the first service may update the third metadata to the second metadata. When updating the third metadata to the second metadata, the first service may replace corresponding content in the third metadata with content that is in the second metadata and that is different from the content in the third metadata. That is, only changed content in the third metadata is replaced. Alternatively, the first service may first delete the third metadata, and then store the second metadata, or may update the third metadata to the second metadata.

In the foregoing method, the second electronic device may also modify only the third metadata corresponding to the third media content into the second metadata, and the third media content may remain unchanged. In this case, the foregoing second media content is the third media content. After the first service triggers the current downlink synchronization process, the second electronic device also needs to indicate, to the first service according to the foregoing method, the second metadata and information indicating that the second metadata is modified third metadata, so that the first service updates the stored third metadata to the second metadata.

In still another possible case, after the first service obtains and stores the second metadata, if the second electronic device deletes the second media content and the corresponding second metadata, when the first service performs the downlink synchronization process again, the first service may indicate the second electronic device to send the downlink synchronization information to the first service. After receiving the indication information, the second electronic device determines that the second media content and the second metadata are deleted. In this case, the second electronic device sends the downlink synchronization information including third indication information to the first service. The third indication information indicates that the second metadata is metadata corresponding to the deleted media content in the second electronic device. In this case, the first service may determine, based on the third indication information, to delete the second metadata, and the first service deletes the stored second metadata. Optionally, the third indication information is included in the foregoing synchronization indication information, and the first service may send the third indication information to the second electronic device in a manner of sending the foregoing synchronization indication information.

S 1702: The first application obtains the first information and/or the second information from the first service.

After the first service obtains and stores the first metadata and the second metadata, the first application may access the first metadata and the second metadata by using the first interface provided by the first service, to determine corresponding first information and second information. The corresponding first information and second information may be displayed to the user, so that the user may know content stored in the first electronic device and the second electronic device.

S1703: The first application displays the first information and/or the second information.

In some embodiments of this application, after the first application displays the first information and the second information, or after the first application displays the second information, the user may indicate, by performing a corresponding operation, the first application to locally store, in the first electronic device, the second media content identified by the second information. In this case, the first application may indicate the first service to obtain and store the second media content, and the first service may obtain the second media content from the second electronic device and store the second media content, or may provide the second media content for the first application. After the first service provides the second media content to the first application, the first application may display the media content to the user. The first application may determine, based on an operation performed by the user, to modify or delete the second media content and the second metadata.

Specifically, when the first application modifies the second media content to seventh media content based on the operation of the user, the first application indicates the first service to update the second media content to the seventh media content and update the second metadata to fourth metadata corresponding to the seventh media content. The first service updates the stored second media content to the seventh media content based on the indication of the first application, and updates the stored second metadata to the fourth metadata. After updating the second media content to the seventh media content, the first service may trigger performing of the uplink synchronization process. During performing of the uplink synchronization process, the first service may send the seventh media content, the fourth metadata, and fifth indication information to the second electronic device. The fifth indication information indicates to update the stored second media content to the seventh media content, and update the stored second metadata to the fourth metadata. In this case, the second electronic device may update the stored second media content to the seventh media content and update the stored second metadata to the fourth metadata based on the indication of the first service.

When the first application receives an indication from the user for deleting the second media content and the second metadata that are stored in the first electronic device and the second electronic device, the first application may first determine whether the second media content is stored in the first electronic device. If the second media content is stored in the first electronic device, the first application indicates the first service to delete the second media content and the second metadata, and the first service deletes the stored second media content and the stored second metadata based on the indication. Otherwise, the first application may only indicate the first service to delete the second metadata, and the first service deletes the stored second metadata based on the indication. After deleting the stored second media content and the stored second metadata, or after deleting the second metadata, the first service may trigger performing of the uplink synchronization process. During performing of the uplink synchronization process, the first service indicates the second electronic device to delete the stored second media content and the stored second metadata.

In some embodiments of this application, the first electronic device further includes a second application. After step S1701, the method may further include steps S1704 to S1705.

S1704: The second application obtains the first information and/or the second information from the first service.

S1705: The second application displays the first information and/or the second information.

For a method for obtaining and displaying the first information and/or the second information by the second application, refer to the method for obtaining and displaying the first information and/or the second information by the first application. Details are not described herein again.

For a specific performing process of the foregoing steps, refer to related descriptions in the foregoing embodiments. Details are not described herein again.

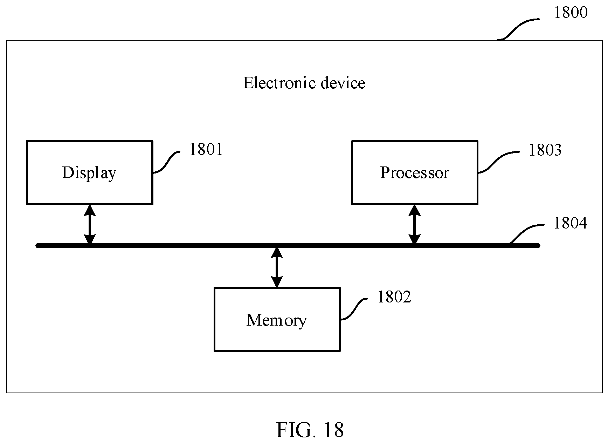

Based on the foregoing embodiments and a same concept, an embodiment of this application further provides an electronic device. The electronic device is configured to implement the content management method provided in embodiments of this application. As shown in FIG. 18, the electronic device 1800 may include a display 1801, a memory 1802, one or more processors 1803, and one or more computer programs (not shown in the figure). The foregoing components may be coupled by using one or more communication buses 1804.

The display 1801 is configured to display a related user interface such as an image, a video, or an application interface. The memory 1802 stores one or more computer programs (code). The one or more computer programs include computer instructions. The one or more processors 1803 invoke the computer instructions stored in the memory 1802, so that the electronic device 1800 performs the content management method provided in embodiments of this application.

During specific implementation, the memory 1802 may include a high-speed random access memory, and may also include a non-volatile memory, for example, one or more magnetic disk storage devices, a flash memory device, or another non-volatile solid-state storage device. The memory 1802 may store an operating system (briefly referred to as a system below), for example, an embedded operating system such as Android, iOS, Windows, or Linux. The memory 1802 may be configured to store an implementation program in embodiments of this application. The memory 1802 may further store a network communication program. The network communication program may be used to communicate with one or more additional devices, one or more user equipments, or one or more network devices. The one or more processors 1803 may be a general-purpose central processing unit (Central Processing Unit, CPU), a microprocessor, an application-specific integrated circuit (Application-Specific Integrated Circuit, ASIC), or one or more integrated circuits configured to control program execution in the solutions of this application.

It should be noted that FIG. 18 is merely an implementation of the electronic device 1800 provided in this embodiment of this application. In actual application, the electronic device 1800 may further include more or fewer components. This is not limited herein.

Based on the foregoing embodiments and a same concept, an embodiment of this application further provides a content management system, including a first electronic device and a second electronic device. The first electronic device includes a first service and a first application. The first electronic device is configured to: obtain first information and second information by using the first service, and store the first information and the second information, where the first information identifies first media content stored in the first electronic device, and the second information identifies second media content stored in the second electronic device; obtain the first information and/or the second information from the first service by using the first application; and display the first information and/or the second information by using the first application.

In a possible design, the second electronic device is a home storage device.

In a possible design, the first electronic device is further configured to: determine, by using the first application, to obtain the second media content; send a content obtaining request to the first service by using the first application, where the content obtaining request is used to request to obtain the second media content; and request, in response to the received content obtaining request by using the first service, to obtain the second media content from the second electronic device. The second electronic device is configured to send the second media content to the first service. The first electronic device is further configured to: receive the second media content from the second electronic device by using the first service, and send the second media content to the first application; and display the second media content after receiving the second media content by using the first application.

It should be noted that, for a method performed by the first electronic device in the system, reference may be made to the method performed by the terminal device or the first electronic device in the foregoing embodiments, and for a method performed by the second electronic device in the system, reference may be made to the method performed by the HDC device or the second electronic device in the foregoing embodiments. Details are not described herein again.

Based on the foregoing embodiments and a same concept, an embodiment of this application further provides a computer-readable storage medium. The computer-readable storage medium stores a computer program. When the computer program is run on a computer, the computer is enabled to perform the method provided in the foregoing embodiments of this application.

Based on the foregoing embodiments and a same concept, an embodiment of this application further provides a computer program product. The computer program product includes a computer program or instructions. When the computer program or the instructions are run on a computer, the computer is enabled to perform the method provided in the foregoing embodiments of this application.

All or some of the methods in embodiments of this application may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, the SSD), or the like.

It is clearly that a person skilled in the art can make various modifications and variations to this application without departing from the scope of this application. This application is intended to cover these modifications and variations of this application provided that they fall within the scope of protection defined by the following claims.

## Claims

1. A content management method performed by a first electronic device, wherein the first electronic device comprises a first service and a first application, the first application being at an application layer of the first electronic device; and the method comprises:
obtaining (S1701), by the first service, first information and second information, and storing the first information and the second information, wherein the first information identifies first media content stored in the first electronic device, and the second information identifies second media content stored in a second electronic device;
obtaining (S1702), by the first application, the first information and/or the second information from the first service; and
displaying (S1703), by the first application, the first information and/or the second information,
wherein the first electronic device further comprises a second application at the application layer of the first electronic device; and
after the obtaining, by the first service, first information and second information, and storing the first information and the second information, the method further comprises:
obtaining (S1704), by the second application, the first information and/or the second information from the first service; and
displaying (S1705), by the second application, the first information and/or the second information,
wherein the first service is located at an application framework layer in an operating system of the first electronic device, wherein the application framework layer provides an Application Programming Interface, API, and a programming framework for the first application and the second application at the application layer.

2. The method according to claim 1, wherein the obtaining, by the first application, the first information and/or the second information from the first service comprises:
obtaining, by the first application, the first information and/or the second information from the first service by using a first interface provided by the first service.

3. The method according to any one of claims 1 or 2, wherein first metadata corresponding to the first media content comprises the first information, and second metadata corresponding to the second media content comprises the second information; and
the obtaining, by the first service, first information and second information, and storing the first information and the second information comprises:
obtaining and storing, by the first service, the first metadata, and obtaining and storing, by the first service, the second metadata.

4. The method according to claim 3, wherein the obtaining and storing, by the first service, the second metadata comprises:
performing, by the first service, a downlink synchronization process, wherein the downlink synchronization process comprises:
indicating, by the first service, the second electronic device to send downlink synchronization information to the first service;
receiving, by the first service, the downlink synchronization information sent by the second electronic device, wherein the downlink synchronization information comprises the second metadata and first indication information, and the first indication information indicates that the second metadata is metadata corresponding to created media content in the second electronic device;
determining, by the first service based on the first indication information, to store the second metadata; and
storing, by the first service, the second metadata.

5. The method according to claim 3, wherein before the obtaining and storing, by the first service, the second metadata, the method further comprises:
obtaining and storing, by the first service, third metadata, wherein the third metadata is metadata corresponding to third media content stored in the second electronic device; and
the obtaining and storing, by the first service, the second metadata comprises:
performing, by the first service, a downlink synchronization process, wherein the downlink synchronization process comprises:
indicating, by the first service, the second electronic device to send downlink synchronization information to the first service;
receiving, by the first service, the downlink synchronization information from the second electronic device, wherein the downlink synchronization information comprises the second metadata and second indication information, the second indication information indicates that the second metadata is metadata obtained after the third metadata is modified, and the second media content is the third media content or modified third media content;
determining, by the first service based on the second indication information, to update the stored third metadata by using the second metadata; and
updating, by the first service, the third metadata to the second metadata.

6. The method according to any one of claims 3 to 5, wherein after the displaying, by the first application, the first information and the second information, or after the displaying, by the first application, the second information, the method further comprises:
sending, by the first application, fourth indication information to the first service when determining to delete the second metadata, wherein the fourth indication information indicates to delete the second metadata; and
deleting, by the first service, the second metadata in response to the received fourth indication information.

7. The method according to any one of claims 3 to 5, wherein after the obtaining, by the first application, the first information and the second information from the first service, or after the obtaining, by the first application, the second information from the first service, the method further comprises:
indicating, by the first application, the first service to obtain the second media content identified by the second information; and
obtaining, by the first service, the second media content from the second electronic device, and storing the second media content.

8. The method according to claim 7, wherein after the obtaining, by the first service, the second media content from the second electronic device, and storing the second media content, the method further comprises:
obtaining, by the first application, the second media content from the first service;
modifying, by the first application, the second media content to seventh media content, and indicating the first service to update the second media content to the seventh media content and update the second metadata to fourth metadata, wherein the fourth metadata is metadata corresponding to the seventh content; and
updating, by the first service, the second media content to the seventh media content, and updating the second metadata to the fourth metadata.

9. The method according to claim 8, wherein after the updating, by the first service, the second media content to the seventh media content, and updating the second metadata to the fourth metadata, the method further comprises:
performing, by the first service, an uplink synchronization process, wherein the uplink synchronization process comprises:
sending, by the first service, the seventh media content, the fourth metadata, and fifth indication information to the second electronic device, wherein the fifth indication information indicates to update the stored second media content to the seventh media content, and update the stored second metadata to the fourth metadata.

10. The method according to claim 9, wherein the first electronic device is in a state in which a first user account is logged in;
before the performing, by the first service, an uplink synchronization process, the method further comprises:
sending, by the first service, a synchronization lock obtaining request to the second electronic device, wherein the synchronization lock obtaining request is used to request to obtain a synchronization lock, the synchronization lock indicates to allow the first electronic device to perform the uplink synchronization process, and prohibit a target electronic device from performing the uplink synchronization process, and the target electronic device is an electronic device that logs in to the first user account other than the first electronic device; and
receiving, by the first service, synchronization lock indication information from the second electronic device, wherein the synchronization lock indication information indicates the synchronization lock; and
after the performing, by the first service, an uplink synchronization process, the method further comprises:
sending, by the first service, a synchronization lock canceling request to the second electronic device, wherein the synchronization lock canceling request is used to request to cancel the synchronization lock.

11. The method according to any one of claims 1 to 10, wherein the first media content and the second media content are images or videos, and the first information and the second information are thumbnails.

12. The method according to any one of claims 1 to 11, wherein the second electronic device is a home storage device.

13. An electronic device (1800), wherein the electronic device comprises a display (1801), a memory (1802), and one or more processors (1803), wherein
the memory is configured to store computer program code, and the computer program code comprises computer instructions; and when the computer instructions are executed by the one or more processors, the electronic device performs the method according to any one of claims 1 to 12.

14. A computer-readable storage medium, wherein the computer-readable storage medium stores a computer program, and when the computer program is run on an electronic device, the electronic device performs the method according to any one of claims 1 to 12.

15. A computer program product, wherein the computer program product comprises a computer program or instructions, and when the computer program or the instructions are run on an electronic device, the electronic device performs the method according to any one of claims 1 to 12.

## Patentansprüche

1. Inhaltsverwaltungsverfahren, das durch eine erste elektronische Vorrichtung durchgeführt wird, wobei die erste elektronische Vorrichtung einen ersten Dienst und eine erste Anwendung umfasst, wobei die erste Anwendung auf einer Anwendungsschicht der ersten elektronischen Vorrichtung ist; und das Verfahren Folgendes umfasst:
Erlangen (S1701), durch den ersten Dienst, von ersten Informationen und zweiten Informationen und Speichern der ersten Informationen und der zweiten Informationen, wobei die ersten Informationen erste Medieninhalte, die auf der ersten elektronischen Vorrichtung gespeichert sind, identifizieren und die zweiten Informationen zweite Medieninhalte, die auf einer zweiten elektronischen Vorrichtung gespeichert sind, identifizieren;
Erlangen (S1702), durch die erste Anwendung, der ersten Informationen und/oder der zweiten Informationen von dem ersten Dienst; und
Darstellen (S1703), durch die erste Anwendung, der ersten Informationen und/oder der zweiten Informationen,
wobei die erste elektronische Vorrichtung ferner eine zweite Anwendung auf der Anwendungsschicht der ersten elektronischen Vorrichtung umfasst; und
das Verfahren nach dem Erlangen, durch den ersten Dienst, der ersten Informationen und der zweiten Informationen und Speichern der ersten Informationen und der zweiten Informationen ferner Folgendes umfasst:
Erlangen (S1704), durch die zweite Anwendung, der ersten Informationen und/oder der zweiten Informationen von dem ersten Dienst; und
Darstellen (S1705), durch die zweite Anwendung, der ersten Informationen und/oder der zweiten Informationen,
wobei sich der erste Dienst auf einer Anwendungs-Framework-Schicht in einem Betriebssystem der ersten elektronischen Vorrichtung befindet, wobei die Anwendungs-Framework-Schicht eine Anwendungsprogrammierschnittstelle, API, und ein Programmier-Framework für die erste Anwendung und die zweite Anwendung auf der Anwendungsschicht bereitstellt.

2. Verfahren nach Anspruch 1, wobei das Erlangen, durch die erste Anwendung, der ersten Informationen und/oder der zweiten Informationen von dem ersten Dienst Folgendes umfasst:
Erlangen, durch die erste Anwendung, der ersten Informationen und/oder der zweiten Informationen von dem ersten Dienst unter Verwendung einer ersten Schnittstelle, die durch den ersten Dienst bereitgestellt wird.

3. Verfahren nach einem der Ansprüche 1 oder 2, wobei erste Metadaten, die den ersten Medieninhalten entsprechen, die ersten Informationen umfassen und die zweiten Metadaten, die den zweiten Medieninhalten entsprechen, die zweiten Informationen umfassen; und
wobei das Erlangen, durch den ersten Dienst, von ersten Informationen und zweiten Informationen und Speichern der ersten Informationen und der zweiten Informationen Folgendes umfasst:
Erlangen und Speichern, durch den ersten Dienst, der ersten Metadaten und Erlangen und Speichern, durch den ersten Dienst, der zweiten Metadaten.

4. Verfahren nach Anspruch 3, wobei das Erlangen und Speichern, durch den ersten Dienst, der zweiten Metadaten Folgendes umfasst:
Durchführen, durch den ersten Dienst, eines Downlink-Synchronisationsprozesses, wobei der Downlink-Synchronisationsprozess Folgendes umfasst:
Anzeigen, durch den ersten Dienst, der zweiten elektronischen Vorrichtung, dass Downlink-Synchronisationsinformationen an den ersten Dienst zu senden sind;
Empfangen, durch den ersten Dienst, der durch die zweite elektronische Vorrichtung gesendeten Downlink-Synchronisationsinformationen, wobei die Downlink-Synchronisationsinformationen die zweiten Metadaten und erste Anzeigeinformationen umfassen und die ersten Anzeigeinformationen anzeigen, dass es sich bei den zweiten Metadaten um Metadaten handelt, die den in der zweiten elektronischen Vorrichtung erstellten Medieninhalten entsprechen;
Bestimmen, durch den ersten Dienst auf der Grundlage der ersten Anzeigeinformationen, die zweiten Metadaten zu speichern; und
Speichern, durch den ersten Dienst, der zweiten Metadaten.

5. Verfahren nach Anspruch 3, wobei das Verfahren vor dem Erlangen und Speichern, durch den ersten Dienst, der zweiten Metadaten ferner Folgendes umfasst:
Erlangen und Speichern, durch den ersten Dienst, von dritten Metadaten, wobei es sich bei den dritten Metadaten um Metadaten handelt, die dritten Medieninhalten, die in der zweiten elektronischen Vorrichtung gespeichert sind, entsprechen; und
das Erlangen und Speichern, durch den ersten Dienst, der zweiten Metadaten Folgendes umfasst:
Durchführen, durch den ersten Dienst, eines Downlink-Synchronisationsprozesses, wobei der Downlink-Synchronisationsprozess Folgendes umfasst:
Anzeigen, durch den ersten Dienst, der zweiten elektronischen Vorrichtung, dass Downlink-Synchronisationsinformationen an den ersten Dienst zu senden sind;
Empfangen, durch den ersten Dienst, der Downlink-Synchronisationsinformationen von der zweiten elektronischen Vorrichtung, wobei die Downlink-Synchronisationsinformationen die zweiten Metadaten und die zweiten Anzeigeinformationen umfassen, die zweiten Anzeigeinformationen anzeigen, dass es sich bei den zweiten Metadaten um Metadaten handelt, die erlangt werden, nachdem die dritten Metadaten geändert worden sind, und dass es sich bei den zweiten Medieninhalten um die dritten Medieninhalte oder geänderte dritte Medieninhalte handelt;
Bestimmen, durch den ersten Dienst auf der Grundlage der zweiten Anzeigeinformationen, die gespeicherten dritten Metadaten unter Verwendung der zweiten Metadaten zu aktualisieren; und
Aktualisieren, durch den ersten Dienst, der dritten Metadaten auf die zweiten Metadaten.

6. Verfahren nach einem der Ansprüche 3 bis 5, wobei das Verfahren nach dem Darstellen, durch die erste Anwendung, der ersten Informationen und der zweiten Informationen oder nach dem Darstellen, durch die erste Anwendung, der zweiten Informationen ferner Folgendes umfasst:
Senden, durch die erste Anwendung, von vierten Anzeigeinformationen an den ersten Dienst, wenn bestimmt wird, die zweiten Metadaten zu löschen, wobei die vierten Anzeigeinformationen anzeigen, dass die zweiten Metadaten zu löschen sind; und
Löschen, durch den ersten Dienst, der zweiten Metadaten als Reaktion auf die empfangenen vierten Anzeigeinformationen.

7. Verfahren nach einem der Ansprüche 3 bis 5, wobei das Verfahren nach dem Erlangen, durch die erste Anwendung, der ersten Informationen und der zweiten Informationen von dem ersten Dienst oder nach dem Erlangen, durch die erste Anwendung, der zweiten Informationen von dem ersten Dienst ferner Folgendes umfasst:
Anzeigen, durch die erste Anwendung, dem ersten Dienst, dass die durch die zweiten Informationen identifizierten zweiten Medieninhalte zu erlangen sind; und
Erlangen, durch den ersten Dienst, der zweiten Medieninhalte von der zweiten elektronischen Vorrichtung und Speichern der zweiten Medieninhalte.

8. Verfahren nach Anspruch 7, wobei das Verfahren nach dem Erlangen, durch den ersten Dienst, der zweiten Medieninhalte von der zweiten elektronischen Vorrichtung und Speichern der zweiten Medieninhalte ferner Folgendes umfasst:
Erlangen, durch die erste Anwendung, der zweiten Medieninhalte von dem ersten Dienst;
Ändern, durch die erste Anwendung, der zweiten Medieninhalte in siebte Medieninhalte und Anzeigen gegenüber dem ersten Dienst, die zweiten Medieninhalte auf die siebten Medieninhalte zu aktualisieren und die zweiten Metadaten auf vierte Metadaten zu aktualisieren, wobei es sich bei den vierten Metadaten um Metadaten, die den siebten Inhalten entsprechen, handelt; und
Aktualisieren, durch den ersten Dienst, der zweiten Medieninhalte auf die siebten Medieninhalte und Aktualisieren der zweiten Metadaten auf die vierten Metadaten.

9. Verfahren nach Anspruch 8, wobei das Verfahren nach dem Aktualisieren, durch den ersten Dienst, der zweiten Medieninhalte auf die siebten Medieninhalte und Aktualisieren der zweiten Metadaten auf die vierten Metadaten ferner Folgendes umfasst:
Durchführen, durch den ersten Dienst, eines Uplink-Synchronisationsprozesses, wobei der Uplink-Synchronisationsprozess Folgendes umfasst:
Senden, durch den ersten Dienst, der siebten Medieninhalte, der vierten Metadaten und der fünften Anzeigeinformationen an die zweite elektronische Vorrichtung, wobei die fünften Anzeigeinformationen anzeigen, dass die gespeicherten zweiten Medieninhalte auf die siebten Medieninhalte zu aktualisieren sind und die gespeicherten zweiten Metadaten auf die vierten Metadaten zu aktualisieren sind.

10. Verfahren nach Anspruch 9, wobei die erste elektronische Vorrichtung in einem Zustand ist, in dem ein erstes Benutzerkonto angemeldet ist;
das Verfahren vor dem Durchführen, durch den ersten Dienst, eines Uplink-Synchronisationsprozesses ferner Folgendes umfasst:
Senden, durch den ersten Dienst, einer Anforderung zum Erlangen einer Synchronisationssperre an die zweite elektronische Vorrichtung, wobei die Anforderung zum Erlangen einer Synchronisationssperre dazu verwendet wird, anzufordern, eine Synchronisationssperre zu erlangen, die Synchronisationssperre anzeigt, dass es der ersten elektronischen Vorrichtung zu ermöglichen ist, den Uplink-Synchronisationsprozess durchzuführen, und dass es einer elektronischen Zielvorrichtung zu untersagen ist, den Uplink-Synchronisationsprozess durchzuführen, und die elektronische Zielvorrichtung eine elektronische Vorrichtung ist, die sich bei dem ersten Benutzerkonto anmeldet und es sich nicht um die erste elektronische Vorrichtung handelt; und
Empfangen, durch den ersten Dienst, von Synchronisationssperreanzeigeinformationen von der zweiten elektronischen Vorrichtung, wobei die Synchronisationssperreanzeigeinformationen die Synchronisationssperre anzeigen; und
das Verfahren nach dem Durchführen, durch den ersten Dienst, eines Uplink-Synchronisationsprozesses ferner Folgendes umfasst:
Senden, durch den ersten Dienst, einer Anforderung zum Aufheben der Synchronisationssperre an die zweite elektronische Vorrichtung, wobei die Anforderung zum Aufheben der Synchronisationssperre dazu verwendet wird, anzufordern, die Synchronisationssperre aufzuheben.

11. Verfahren nach einem der Ansprüche 1 bis 10, wobei es sich bei den ersten Medieninhalten und den zweiten Medieninhalten um Bilder oder Videos handelt und es sich bei den ersten Informationen und den zweiten Informationen um Miniaturansichten handelt.

12. Verfahren nach einem der Ansprüche 1 bis 11, wobei es sich bei der zweiten elektronischen Vorrichtung um eine Heimspeichervorrichtung handelt.

13. Elektronische Vorrichtung (1800), wobei die elektronische Vorrichtung eine Anzeige (1801), einen Speicher (1802) und einen oder mehrere Prozessoren (1803) umfasst, wobei
der Speicher dazu konfiguriert ist, Computerprogrammcode zu speichern, und der Computerprogrammcode Computeranweisungen umfasst; und, wenn die Computeranweisungen durch den einen oder die mehreren Prozessoren ausgeführt werden, die elektronische Vorrichtung das Verfahren nach einem der Ansprüche 1 bis 12 durchführt.

14. Computerlesbares Speichermedium, wobei das computerlesbare Speichermedium ein Computerprogramm speichert und, wenn das Computerprogramm auf einer elektronischen Vorrichtung läuft, die elektronische Vorrichtung das Verfahren nach einem der Ansprüche 1 bis 12 durchführt.

15. Computerprogrammprodukt, wobei das Computerprogrammprodukt ein Computerprogramm oder Anweisungen umfasst und, wenn das Computerprogramm oder die Anweisungen auf einer elektronischen Vorrichtung laufen, die elektronische Vorrichtung das Verfahren nach einem der Ansprüche 1 bis 12 durchführt.

## Revendications

1. Procédé de gestion de contenus réalisé par un premier dispositif électronique, dans lequel le premier dispositif électronique comprend un premier service et une première application, la première application étant située au niveau de la couche d'application du premier dispositif électronique ; et le procédé comprend :
l'obtention (S1701), par le premier service, des premières informations et des deuxièmes informations, et le stockage des premières informations et des deuxièmes informations, dans lequel les premières informations identifient le premier contenu multimédia stocké dans le premier dispositif électronique, et les deuxièmes informations identifient le deuxième contenu multimédia stocké dans un second dispositif électronique ;
l'obtention (S1702), par la première application, des premières informations et/ou des deuxièmes informations à partir du premier service ; et
l'affichage (S1703), par la première application, des premières informations et/ou des deuxièmes informations,
dans lequel le premier dispositif électronique comprend également une seconde application au niveau de la couche d'application du premier dispositif électronique ; et
après l'obtention, par le premier service, des premières informations et des deuxièmes informations, et le stockage des premières informations et des deuxièmes informations, le procédé comprend également :
l'obtention (S1704), par la seconde application, des premières informations et/ou des deuxièmes informations à partir du premier service ; et
l'affichage (S1705), par la seconde application, des premières informations et/ou des deuxièmes informations,
dans lequel le premier service est situé au niveau d'une couche d'infrastructure d'application dans un système d'exploitation du premier dispositif électronique, dans lequel la couche d'infrastructure d'application fournit une interface de programmation d'application (API) et une infrastructure de programmation pour la première application et la seconde application au niveau de la couche d'application.

2. Procédé selon la revendication 1, dans lequel l'obtention, par la première application, des premières informations et/ou des deuxièmes informations à partir du premier service comprend :
l'obtention, par la première application, des premières informations et/ou des deuxièmes informations à partir du premier service à l'aide d'une première interface fournie par le premier service.

3. Procédé selon l'une quelconque des revendications 1 ou 2, dans lequel les premières métadonnées correspondant au premier contenu multimédia comprennent les premières informations, et les deuxièmes métadonnées correspondant au deuxième contenu multimédia comprennent les deuxièmes informations ; et l'obtention, par le premier service, des premières informations et des deuxièmes informations, et le stockage des premières informations et des deuxièmes informations, comprennent :
l'obtention et le stockage, par le premier service, des premières métadonnées, et l'obtention et le stockage, par le premier service, des deuxièmes métadonnées.

4. Procédé selon la revendication 3, dans lequel l'obtention et le stockage, par le premier service, des deuxièmes métadonnées, comprennent :
la réalisation, par le premier service, d'un processus de synchronisation de liaison descendante, dans lequel le processus de synchronisation de liaison descendante comprend :
l'indication, par le premier service, du second dispositif électronique à envoyer des informations de synchronisation de liaison descendante au premier service ;
la réception, par le premier service, des informations de synchronisation de liaison descendante envoyées par le second dispositif électronique, dans lequel les informations de synchronisation de liaison descendante comprennent les deuxièmes métadonnées et les premières informations d'indication, et les premières informations d'indication indiquent que les deuxièmes métadonnées sont des métadonnées correspondant au contenu multimédia créé dans le second dispositif électronique ;
la détermination, par le premier service sur la base des premières informations d'indication, de stocker les deuxièmes métadonnées ; et
le stockage, par le premier service, des deuxièmes métadonnées.

5. Procédé selon la revendication 3, dans lequel avant l'obtention et le stockage, par le premier service, des deuxièmes métadonnées, le procédé comprend également :
l'obtention et le stockage, par le premier service, des troisièmes métadonnées, dans lequel les troisièmes métadonnées sont des métadonnées correspondant au troisième contenu multimédia stocké dans le second dispositif électronique ; et
l'obtention et le stockage, par le premier service, des deuxièmes métadonnées comprennent :
la réalisation, par le premier service, d'un processus de synchronisation de liaison descendante, dans lequel le processus de synchronisation de liaison descendante comprend :
l'indication, par le premier service, du second dispositif électronique à envoyer des informations de synchronisation de liaison descendante au premier service ;
la réception, par le premier service, des informations de synchronisation de liaison descendante à partir du second dispositif électronique, dans lequel les informations de synchronisation de liaison descendante comprennent les deuxièmes métadonnées et les deuxièmes informations d'indication, les deuxièmes informations d'indication indiquent que les deuxièmes métadonnées sont des métadonnées obtenues après la modification des troisièmes métadonnées, et le deuxième contenu multimédia est le troisième contenu multimédia ou le troisième contenu multimédia modifié ;
la détermination, par le premier service sur la base des deuxièmes informations d'indication, de mettre à jour les troisièmes métadonnées stockées à l'aide des deuxièmes métadonnées ; et
la mise à jour, par le premier service, des troisièmes métadonnées vers les deuxièmes métadonnées.

6. Procédé selon l'une quelconque des revendications 3 à 5, dans lequel, après l'affichage, par la première application, des premières informations et des deuxièmes informations, ou après l'affichage, par la première application, des deuxièmes informations, le procédé comprend également :
l'envoi, par la première application, des quatrièmes informations d'indication au premier service lors de la détermination de supprimer les deuxièmes métadonnées, dans lequel les quatrièmes informations d'indication indiquent de supprimer les deuxièmes métadonnées ; et
la suppression, par le premier service, des deuxièmes métadonnées en réponse aux quatrièmes informations d'indication reçues.

7. Procédé selon l'une quelconque des revendications 3 à 5, dans lequel, après l'obtention, par la première application, des premières informations et des deuxièmes informations provenant du premier service, ou après l'obtention, par la première application, des deuxièmes informations provenant du premier service, le procédé comprend également :
l'indication, par la première application, du premier service pour obtenir le deuxième contenu multimédia identifié par les deuxièmes informations ; et
l'obtention, par le premier service, du deuxième contenu multimédia à partir du second dispositif électronique, et le stockage du deuxième contenu multimédia.

8. Procédé selon la revendication 7, dans lequel, après l'obtention, par le premier service, du deuxième contenu multimédia à partir du second dispositif électronique, et le stockage du deuxième contenu multimédia, le procédé comprend également :
l'obtention, par la première application, du deuxième contenu multimédia à partir du premier service ;
la modification, par la première application, du deuxième contenu multimédia en septième contenu multimédia, et l'indication au premier service de mettre à jour le deuxième contenu multimédia en septième contenu multimédia et de mettre à jour les deuxièmes métadonnées en quatrièmes métadonnées, dans lequel les quatrièmes métadonnées sont des métadonnées correspondant au septième contenu ; et
la mise à jour, par le premier service, du deuxième contenu multimédia au septième contenu multimédia, et la mise à jour des deuxièmes métadonnées aux quatrièmes métadonnées.

9. Procédé selon la revendication 8, dans lequel, après la mise à jour, par le premier service, du deuxième contenu multimédia au septième contenu multimédia et la mise à jour des deuxièmes métadonnées aux quatrièmes métadonnées, le procédé comprend également :
la réalisation, par le premier service, d'un processus de synchronisation de liaison montante, dans lequel le processus de synchronisation de liaison montante comprend :
l'envoi, par le premier service, du septième contenu multimédia, des quatrièmes métadonnées et des cinquièmes informations d'indication au second dispositif électronique, dans lequel les cinquièmes informations d'indication indiquent de mettre à jour le deuxième contenu multimédia stocké au septième contenu multimédia et de mettre à jour les deuxièmes métadonnées stockées aux quatrièmes métadonnées.

10. Procédé selon la revendication 9, dans lequel le premier dispositif électronique est dans un état dans lequel un premier compte utilisateur est connecté ;
avant la réalisation, par le premier service, d'un processus de synchronisation de liaison montante, le procédé comprend également :
l'envoi, par le premier service, d'une demande d'obtention de verrou de synchronisation au second dispositif électronique, dans lequel la demande d'obtention de verrou de synchronisation est utilisée pour demander d'obtenir un verrou de synchronisation, le verrou de synchronisation indique de permettre au premier dispositif électronique de réaliser le processus de synchronisation de liaison montante et d'interdire à un dispositif électronique cible de réaliser le processus de synchronisation de liaison montante, et le dispositif électronique cible est un dispositif électronique autre que le premier dispositif électronique qui se connecte au premier compte utilisateur ; et
la réception, par le premier service, des informations d'indication de verrouillage de synchronisation provenant du second dispositif électronique, dans lequel les informations d'indication de verrouillage de synchronisation indiquent le verrouillage de synchronisation ; et
après la réalisation, par le premier service, d'un processus de synchronisation de liaison montante, le procédé comprend également :
l'envoi, par le premier service, d'une demande d'annulation du verrouillage de synchronisation au second dispositif électronique, dans lequel la demande d'annulation du verrouillage de synchronisation est utilisée pour demander d'annuler le verrouillage de synchronisation.

11. Procédé selon l'une quelconque des revendications 1 à 10, dans lequel le premier contenu multimédia et le deuxième contenu multimédia sont des images ou des vidéos, et les premières informations et les deuxièmes informations sont des vignettes.

12. Procédé selon l'une quelconque des revendications 1 à 11, dans lequel le second dispositif électronique est un dispositif de stockage domestique.

13. Dispositif électronique (1800), dans lequel le dispositif électronique comprend un affichage (1801), une mémoire (1802) et un ou plusieurs processeurs (1803), dans lequel la mémoire est configurée pour stocker un code de programme informatique, et le code de programme informatique comprend des instructions informatiques ; et, lorsque les instructions informatiques sont exécutées par les un ou plusieurs processeurs, le dispositif électronique réalise le procédé selon l'une quelconque des revendications 1 à 12.

14. Support de stockage lisible par ordinateur, dans lequel le support de stockage lisible par ordinateur stocke un programme informatique, et lorsque le programme informatique s'exécute sur un dispositif électronique, le dispositif électronique réalise le procédé selon l'une quelconque des revendications 1 à 12.

15. Produit de programme informatique, dans lequel le produit de programme informatique comprend un programme informatique ou des instructions, et lorsque le programme informatique ou les instructions sont exécutés par un dispositif électronique, le dispositif électronique réalise le procédé selon l'une quelconque des revendications 1 à 12.
